# EUROPÄISCHE PATENTSCHRIFT

(11) **EP 1 327 135 B1**
(45) Veröffentlichungstag und Bekanntmachung des Hinweises auf die Patenterteilung: **24.02.2010**
(21) Anmeldenummer: 01969673.1
(22) Anmeldetag: 30.08.2001
(51) Int. Cl.: G01N 21/77, G01N 21/64

(54) **SYSTEM UND VERFAHREN ZUR MULTIANALYTBESTIMMUNG**
MULTIANALYTE DETERMINATION SYSTEM AND METHODS
SYSTEME ET PROCEDES POUR DETERMINER PLUSIEURS ANALYTES

(30) Priorität: 04.09.2000 CH 171800
(43) Veröffentlichungstag der Anmeldung: 16.07.2003
(73) Patentinhaber: Bayer Technology Services GmbH, 51368 Leverkusen (DE)
(72) Erfinder: ZESCH, Wolfgang, CH-8047 Zürich (CH); BOPP, Martin, A., CH-4053 Basel (CH); PAWLAK, Michael, 79725 Laufenburg (DE)
(86) Internationale Anmeldenummer: PCT/EP2001/010012
(87) Internationale Veröffentlichungsnummer: WO 2002/021110

(56) Entgegenhaltungen:
- DE-A- 4 011 730
- DE-C- 19 628 002
- US-A- 4 698 734
- US-A- 5 071 248
- US-A- 6 044 196

## Beschreibung

Die Erfindung betrifft Ausführungsformen eines optischen Systems zur Lumineszenzbestimmung, mit zwei oder mehr Anregungslichtquellen, einer Sensorplattform sowie einer optischen Komponente mit mehreren diskreten Facetten zur Strahlumlenkung auf die Sensorplattform. Weitere Gegenstände der Erfindung sind davon ableitbare Lumineszenznachweisverfahren mit einem erfindungsgemässen optischen System und analytische Systeme sowie die Verwendung dieser Verfahren für die quantitative Affinitätssensorik sowie für verschiedene weitere Anwendungen.

Ziele der vorliegenden Erfindung sind die Bereitstellung von optischen und analytischen Messanordungen für einen hochempfindlichen Nachweis eines oder mehrerer Analyten mit einer Vielzahl von Messbereichen auf einem gemeinsamen Träger.

Unter der Bezeichnung "Biochips" sind in den letzten Jahren diverse Messanordnungen zur Multianalytbestimmung bekannt geworden, bei denen auf einem Träger, beispielsweise einem Glas- oder Mikroskop-Plättchen, eine Vielzahl von unterschiedlichen biologischen oder biochemischen Erkennungselementen immobilisiert ist, an welche die verschiedenen Analyten während des Nachweisverfahrens gebunden werden. Meistens erfolgt der Nachweis mit optischen Methoden, beispielsweise durch Bestimmung der Lumineszenz, oder spezifischer Fluoreszenz, von sogenannten Lumineszenz- oder Fluoreszenzlabeln, welche während des Verfahrens eingesetzt werden. Die diskreten Messfelder mit unterschiedlichen Erkennungselementen werden in der Regel als "Features" bezeichnet.

Beispielsweise werden in der US 5,445,934 (Affymax Technologies) Arrays von Oligonukleotiden mit einer Dichte von mehr als 1000 Features pro Quadratzentimeter beschrieben und beansprucht. Die Anregung und das Auslegen solcher Arrays beruht auf klassischen optischen Anordnungen und Methoden (Epifluoreszenzanregung und - detektion, d. h. direkte Beleuchtung der Features oder Messbereiche - siehe unten - in einer Auflichtanordnung). Es kann das ganze Array gleichzeitig mit einem aufgeweiteten Anregungslichtbündel beleuchtet werden, was jedoch zu einer relativ geringen Empfindlichkeit führt, da der Streulichtanteil relativ gross ist und Streulicht oder Untergrundfluoreszenzlicht aus dem Glassubstrat auch in den Bereichen erzeugt wird, in denen sich keine zur Bindung des Analyten immobilisierten Oligonukleotide befinden. Um die Anregung und Detektion auf die Bereiche der immobilisierten Features zu beschränken und Lichterzeugung in den Nachbarbereichen zu unterdrücken, werden vielfach konfokale mikroskopische Messanordnungen eingesetzt und die verschiedenen Features sequentiell mittels "Scannen", d.h. sequentieller Anregung und Lumineszenzdetektion mittels Translation des Anregungslichtspunkts auf dem Glassubstrat mittels beweglicher Spiegel oder Translation des Glassubstrats bezüglich des Anregungslichtstrahls, ausgelesen. Ein solcher Scanner wird beispielsweise in der US 5,631,734 beschrieben und beansprucht. Die sequentielle Anregung und Detektion diskreter Messbereiche hat jedoch einen relativ grossen Zeitaufwand zum Auslesen eines Arrays mit einer hohen Anzahl von Features zur Folge. Ausserdem ist die Empfindlichkeit solcher klassischer Anregungs- und Detektionsanordnungen, mit einer direkten Bestrahlung der Messbereiche, verbunden mit der gleichzeitigen Beleuchtung eines gegebenenfalls darüber befindlichen Flüssigkeitsvolumens, für viele Anwendungen nicht ausreichend. Die Empfindlichkeit der gegenwärtig besten Scanner wird mit Nachweisgrenzen in der Grössenordnung zwischen 0.1 und einem Fluorophor pro µm² angegeben.

Zur Erreichung tieferer Nachweisgrenzen sind Messanordnungen entwickelt worden, in denen der Nachweis des Analyten auf dessen Wechselwirkung mit dem evaneszenten Feld beruht, welches mit der Lichtleitung in einem optischen Wellenleiter verbunden ist, wobei auf der Oberfläche des Wellenleiters biochemische oder biologische Erkennungselemente zur spezifischen Erkennung und Bindung der Analytmoleküle immobilisiert sind. Koppelt man eine Lichtwelle in einen optischen Wellenleiter ein, der von optisch dünneren Medien, d.h. Medien mit niedrigerem Brechungsindex, umgeben ist, so wird sie durch Totalreflektion an den Grenzflächen der wellenleitenden Schicht geführt. In die optisch dünneren Medien tritt dabei ein Bruchteil des geführten Lichts ein. Diesen Anteil bezeichnet man als evaneszentes oder quergedämpftes Feld. Die Stärke des evaneszenten Feldes ist sehr stark abhängig von der Dicke der wellenleitenden Schicht selbst sowie vom Verhältnis der Brechungsindices der wellenleitenden Schicht und der sie umgebenden Medien. Bei dünnen Wellenleitern, d. h. Schichtdicken von derselben oder niedrigerer Dicke als der zu führenden Wellenlänge, können diskrete Moden des geleiteten Lichts unterschieden werden. Derartige Verfahren haben den Vorteil, dass die Wechselwirkung mit dem Analyten auf die Eindringtiefe des evaneszenten Feldes ins angrenzende Medium, in der Grössenordnung von einigen hundert Nanometern, beschränkt ist und Störsignale aus der Tiefe des Mediums weitgehend vermieden werden können. Die ersten vorgeschlagenen derartigen Messanordnungen beruhten auf hochmultimodalen, selbsttragenden Einschichtwellenleitern, wie beispielsweise Fasern oder Plättchen aus transparentem Kunststoff oder Glas, mit Stärken von einigen hundert Mikrometern bis zu mehreren Millimetern.

In der WO 94/27137 werden Messanordnungen beschrieben, in denen "Patches" mit unterschiedlichen Erkennungselementen, zum Nachweis unterschiedlicher Analyten, auf einem selbstragenden optischen Substratwellenleiter (Einschichtwellenleiter) mit Stirnflächenlichteinkopplung immobilisiert sind, wobei die räumlich selektive Immobilisierung mittels photoaktivierbarer Crosslinker erfolgt. Gemäss der gegebenen Beschreibung können mehrere Patches in Reihe in gemeinsamen parallelen Flusskanälen oder Probenbehältnissen angeordnet sein, wobei sich die parallelen Flusskanäle oder Probenbehältnisse über die gesamte Länge des als Sensor genutzten Bereichs des Wellenleiters erstrecken, um eine Beeinträchtigung der Lichtleitung im Wellenleiter zu vermeiden. Hinweise auf eine zweidimensionale Integration einer Vielzahl von Patches und Probenbehältnissen werden jedoch nicht gegeben. In einer ähnlichen Anordnung werden in der WO 97/35203 verschiedene Ausführungsformen einer Anordnung beschrieben, in der in parallelen, separaten Flusskanälen oder Probenbehältnissen für die Probe und Kalibrationslösungen niedriger und gegebenenfalls zusätzlich hoher Analytkonzentration unterschiedliche Erkennungselemente zur Bestimmung verschiedener Analyten jeweils immobilisiert sind. Auch hier wird jedoch keinerlei Hinweis auf mögliche 2-dimensionale Anordnungen gegeben.

Zur Verbesserung der Empfindlichkeit und gleichzeitig einfacheren Herstellung in Massenfabrikation wurden planare Dünnschichtwellenleiter vorgeschlagen. Ein planarer Dünnschichtwellenleiter besteht im einfachsten Fall aus einem Dreischichtsystem: Trägermaterial, wellenleitende Schicht, Superstrat (bzw. zu untersuchende Probe), wobei die wellenleitende Schicht den höchsten Brechungsindex besitzt. Zusätzliche Zwischenschichten können die Wirkung des planaren Wellenleiters noch verbessern.

Es sind verschiedene Verfahren für die Einkopplung von Anregungslicht in einen planaren Wellenleiter bekannt. Die am frühesten benutzten Verfahren beruhten auf Stirnflächenkopplung oder Prismenkopplung, wobei zur Verminderung von Reflexionen infolge von Luftspalten im allgemeinen eine Flüssigkeit zwischen Prisma und Wellenleiter aufgebracht wird. Diese beiden Methoden sind vor allem in Verbindung mit Wellenleitern relativ grosser Schichtdicke, d. h. insbesondere selbsttragenden Wellenleitern, sowie bei einem Brechungsindex des Wellenleiters von deutlich unter 2 geeignet. Zur Einkopplung von Anregungslicht in sehr dünne, hochbrechende wellenleitende Schichten ist demgegenüber die Verwendung von Koppelgittern eine wesentlich elegantere Methode. Dabei erfolgt die Einkopplung des auf das Koppelgitter eingestrahlten Anregungslichtes in die wellenleitende Schicht, in der das Gitter moduliert ist, wenn beim Erreichen des Koppelwinkels die Resonanzbedingung für die Einkopplung erfüllt ist. Der jeweilige Einkoppelwinkel für Anregungslicht einer bestimmten Wellenlänge ist abhängig vom Brechungsindex der wellenleitenden Schicht und der benachbarten Medien (Trägerschicht oder Substrat und "Superstrat"), der Dicke der wellenleitenden Schicht, der einzukoppelnden Beugungsordnung (für effiziente Einkopplung i.a. die erste Beugungsordnung) sowie der Gitterperiode. Im Falle von sehr dünnen wellenleitenden Filmen (von etwa 100 nm bis 200 nm bei einem Brechungsindex > 2) gibt es für die Einkopplung von transversal elektrisch polarisisiertem und transversal magnetisch polarisiertem Licht jeweils nur einen diskreten Koppelwinkel zur Einkopplung des TE₀- bzw. TM₀-Modes. Diese Wellenleiter bezeichnet man als monomodal. Der Einkoppelwinkel ändert sich mit der Anregungswellenlänge. Für Dünnschichtwellenleiter, wie sie im weiteren noch genauer beschrieben werden, mit einer wellenleitenden Schicht von Brechungsindex 2.2 und ca. 150 nm Schichtdicke auf einem Glassubstrat (n = 1.52; Angaben für Anregungslicht von 633 nm Wellenlänge) ändert sich der Koppelwinkel um etwa 0.2° bei 1 nm Wellenlängenänderung (bei Einkoppelwinkeln zwischen etwa +30° und -30° Abweichung von der Normalen zum Wellenleiter).

Erfahrungsgemäss sind für eine effiziente Einkopplung Koppelwinkel im Bereich zwischen etwa +30° und -30° Abweichung von der Normalen zum Wellenleiter zu bevorzugen, insbesondere auch um die Anregung sogenannter Substratmoden, d. h. von nicht in der hochbrechenden wellenleitenden Schicht, sondern teilweise im darunter befindlichen Substrat, zu vermeiden, da durch die Entstehung der Substratmoden das evaneszente Feld für den Lumineszenznachweis eines Analyten vermindert wird.

Die Schärfe der Koppelbedingung ist, neben den genannten Parametern, vor allem von der Tiefe der Koppelgitter abhängig. Tendenziell ist der Resonanzwinkel für flache Gitter (von beispielsweise 5 nm -10 nm Gittertiefe) deutlich schärfer definiert (mit einer Halbwertsbreite in der Grössenordnung von 0.01° und darunter) als für tiefe Gitter (vom mehr als beispielsweise 25 nm Gittertiefe). Allerdings ist prinzipiell die Bengungswirkung eines Gitters umso grösser, je tiefer das Gitter ist. Daraus lässt sich allerdings noch nicht direkt auf die Effizienz der Einkopplung in den wellenleitenden Film, mit einem unstrukturierten Bereich im Anschluss an das Einkoppelgitter, schliessen; denn mit steigender Gittertiefe steigt nicht nur die Effizienz der Einkopplung, sondern auch der sofortigen Wiederauskopplung, welche in derselben Richtung wie die Reflektion am Gitter erfolgt. Daher gibt es für die grösstmögliche Einkoppeleffizienz eine optimale Gittertiefe (unter den genannten Bedingungen im Bereich zwischen 10 nm und 20 nm), welche ausser von den bereits genannten Parametern auch noch von der Geometrie des eingestrahlten Lichtstrahls abhängig ist.
Die genannten Parameter sind von grosser Bedeutung für die Toleranzen und geforderte Präzision für die Herstellung der optischen und mechanischen Komponenten eines geeigneten analytischen Systems zur Lumineszenzanregung und -detektion mit planaren Dünnschichtwellenleitern.

Mit dem Begriff "Lumineszenz" wird in dieser Anmeldung die spontane Emission von Photonen im ultravioletten bis infraroten Bereich nach optischer oder nichtoptischer, wie beispielsweise elektrischer oder chemischer oder biochemischer oder thermischer Anregung, bezeichnet. Beispielsweise sind Chemilumineszenz, Biolumineszenz, Elektrolumineszenz und insbesondere Fluoreszenz und Phosphoreszenz unter dem Begriff "Lumineszenz" mit eingeschlossen.

Mittels hochbrechender Dünnschichtwellenleiter, in Kombination mit Lumineszenzdetektion, basierend auf einem nur einige hundert Nanometer dünnen wellenleitenden Film auf einem transparenten Trägermaterial, konnte in den letzten Jahren die Empfindlichkeit deutlich gesteigert werden. Mittels solcher Anordnungen werden Nachweisgrenzen zwischen 0.01 und 0.001 Fluorophoren pro µm², erreicht. Beispielsweise wird in der WO 95/33197 eine Methode beschrieben, in der das Anregungslicht über ein Reliefgitter als diffraktives optisches Element in den wellenleitenden Film eingekoppelt wird. Die im evaneszenten Feld angeregte, aber isotrop abgestrahlte Lumineszenz in der Eindringtiefe des evaneszenten Feldes befindlicher lumineszenzfähiger Substanzen wird mittels geeigneter Messvorrichtungen, wie zum Beispiel Photodioden, Photomultiplier oder CCD-Kameras, gemessen. Es ist auch möglich, den in den Wellenleiter rückgekoppelten Anteil der evaneszent angeregten Strahlung über ein diffraktives optisches Element, zum Beispiel ein Gitter, auszukoppeln und zu messen. Diese Methode ist zum Beispiel in der WO 95/33198 beschrieben.

Zur gleichzeitigen oder aufeinanderfolgenden Durchführung von ausschliesslich lumineszenzbasierenden Mehrfachmessungen mit im wesentlichen monomodalen, planaren anorganischen Wellenleitern sind, z. B. in der WO 96/35940, Vorrichtungen (Arrays) bekannt geworden, in denen auf einer Sensorplattform wenigstens zwei getrennte wellenleitende Bereiche angeordnet sind, so dass das in einem wellenleitenden Bereich geführte Anregungslicht von anderen wellenleitenden Bereichen getrennt ist.
Im Sinne der vorliegenden Erfindung sollen räumlich getrennte Messbereiche durch die geschlossene Fläche definiert werden, die dort immobilisierte biologische oder biochemische oder synthetische Erkennungselemente zur Erkennung eines Analyten aus einer flüssigen Probe einnehmen. Diese Flächen können dabei eine beliebige Geometrie, beispielsweise die Form von Punkten, Kreisen, Rechtecken, Dreiecken, Ellipsen oder Linien, haben.

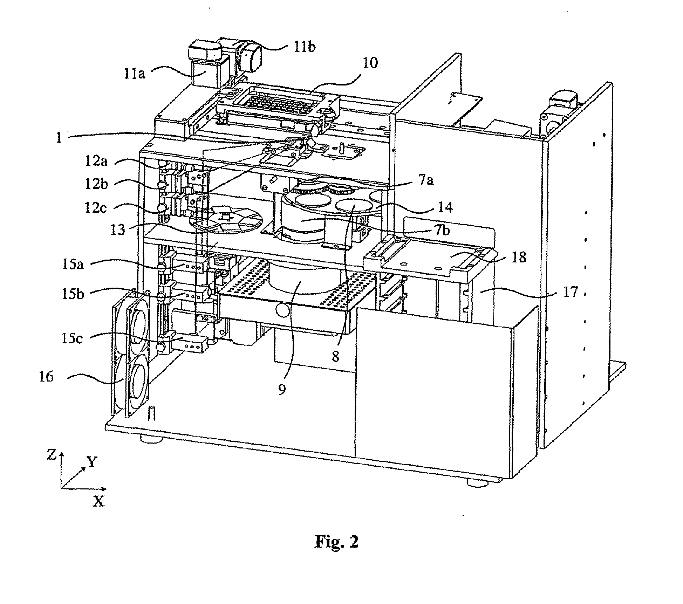

Die US 5,071,248 betrifft ein optisches System zur Bestimmung der Änderung des Brechungsindexes von Proben mit einer Laserlichtquelle (Fig. 2, Bezugszeichen 7) und einer Sensorplattform (Fig. 2, Bezugszeichen 2).

Die US 6,044,196 betrifft eine Beleuchtungseinrichtung für LCD-Bildschirme und als solche die Diffusion von Licht und nicht dessen Bündelung (siehe Fig. 6a bis 6d). Weiterhin wird nur eine Lichtquelle offenbart.
Die DE 196 28 002 C1 betrifft eine Vorrichtung und ein Verfahren zur Durchführung von Fluorezenzimmunotests mittels planarer Lichtwellenleiter mit zwei Lichtquellen (7) und (7') auf entgegengesetzten Seiten der Apparatur (also in sehr großem Abstand). Weiterhin offenbart die DE 196 28 002 C1 keine optische Komponente mit unterschiedlichen Facetten, auf die das Licht der verschiedenen Anregungslichtquellen einfällt.

Die Ausführungsformen, welche in dem hier zitierten Stand der Technik für optische Systeme zur Fluoreszenz- oder Lumineszenzanregung mit Sensorplattformen auf der Basis von planaren Wellenleitern anhand von Beispielen beschrieben werden, beziehen sich fast ausnahmslos auf die Anregung mit jeweils einer einzigen Anregungswellenlänge.Zugleich erfordern die beschriebenen Anordnungen im allgemeinen eine manuelle Eingabe und anschliessende sorgfältige Justierung der Sensorplattform bezüglich der Anregungs- und Detektionsoptik. Damit entsprechen die beschriebenen Beispiele im allgemeinen dem Status von Eigenkonstruktionen oder bestenfalls Prototypen, welche zwar von einem Spezialisten, jedoch nicht von einem durchschnittlich ausgebildeten Benutzer ohne vertiefte Spezialkenntnisse, bedient werden können.

Es besteht daher ein Bedürfnis nach einer vom Benutzer leicht zu bedienenden Anordnung zur Vermessung optischer Sensorplattformen mit einer möglichst automatisierten Positionierung.

Insbesondere bei Anwendungen in der Biologie, beispielsweise für die Expressionsanalyse, ist es üblich, verschiedene Fluoreszenzlabel einzusetzen, welche bei unterschiedlichen Wellenlängen angeregt werden. Diesem Bedürfnis wird mit einer Reihe von kommerziell erhältlichen Scannersystemen für die direkte Auflichtanregung entsprochen, indem das Anregungslicht von zwei oder sogar mehr Laserlichtquellen auf die Probe geleitet werden kann. Daher besteht auch ein Bedürfnis nach einem System für die Anregung von Sensorplattformen basierend auf optischen Wellenleitern, welches den Einsatz von mindestens zwei Anregungswellenlängen, ohne Anforderungen an Justierungen durch den Benutzer, ermöglicht.

Die Problemstellung wird durch eine Reihe von Randbedingungen erschwert. Für eine effiziente Erfassung, d.h. Sammlung der isotrop abgestrahlten Lumineszenz, ist der Einsatz von Abbildungsoptiken möglichst hoher numerischer Apertur, vergleichbar mit der Optik eines Mikroskops, wünschenswert, was einen nur geringen Arbeitsabstand zur Sensorplattform zur Folge hat. Zugleich soll die Fläche der Sensorplattform möglichst effizient genutzt, d. h. der ungenutzte Abstand zwischen den Einkoppelgittern und den Messbereichen klein gehalten werden, da der Bereitstellungspreis der Sensorplattform zu einem hohen Anteil flächenabhängig ist. Hieraus ergeben sich geometrische Schwierigkeiten, das
Anregungslicht an der Sammeloptik vorbei auf die Sensorplattform zu leiten und zugleich eine Abschattung des Sichtfeldes der Sammeloptik durch gegebenfalls zwischen dieser und der Sensorplattform befindliche strahlumlenkende Komponenten zu vermeiden. Schliesslich ist auch noch darauf zu achten, dass keine direkten Reflektionen von Anregungslicht in die Sammeloptik und von dort weiter zum Detektor gelangen.

Die Problemstellung wird noch dadurch erschwert, dass es für viele Anwendungen auch wünschenswert ist, mit offenen Probenbehältnissen oder offenen Auffangbehältnissen, zur Aufnahme von aus einer Flusszelle austretender Flüssigkeit, nach Durchführung von Spülschritten oder sequentieller Reagentienzugabe, zu arbeiten. Eine solche Problemstellung erfordert eine im wesentlichen horizontale Lagerung der Sensorplattform, so dass eine Anpassung an eine Änderung des Koppelwinkels bei Einstrahlung einer geänderten Anregungswellenlänge nicht oder nur in sehr beschränktem Ausmass durch eine Rotation der Sensorplattform bezüglich der Richtung des eingestrahlten Lichts erfolgen kann.

Die genannten Problemstellungen werden durch die nachfolgend beschriebene Erfindung gelöst. Darüber hinaus eignet sich die erfindungsgemässe optische Anordnung nicht nur für die Lumineszenzanregung und -detektion von Messbereichen auf Sensorplattformen basierend auf planaren optischen Wellenleitern, sondern auch auf solchen Plattformen wie beispielsweise Glasplättchen, wie sie mit konventioneller Epifluoreszenzanregung und - detektion betrieben werden.

Gegenstand der Erfindung ist ein optisches System zur Lumineszenzbestimmung, mit einer Sensorplattform, wobei die Sensorplatform einen optischen Schichtwellenleiter mit einer ersten optisch transparenten Schicht auf einer zweiten optisch transparenten Schicht umfasst, wobei die zweite optisch transparente Schicht einen niedrigeren Brechungsindex als die erste optisch transparente Schicht aufweist und die Einkopplung von Anregungslicht (2,3) in die erste optisch transparente Schicht über in der Schicht modulierte diffraktive Gitter (4) erfolgt, dadurch gekennzeichnet, dass das optische System mindestens zwei Anregungslichtquellen sowie eine optische Komponente (1) mit mehreren diskreten Facetten zur Stahlumlenkung umfasst und der Divergenzwinkel zwischen auf unterschiedliche Facetten der optischen Komponente eintreffendem Anregungslicht (2,3) in dem von besagter optischer Komponente abgehenden Strahlengang um mindestens einen Faktor 1.2 gegenüber dem ursprünglichen Divergenzwinkel vergrössert oder verkleinert ist.

Wie vorangehend beschrieben, kann sich im Falle von hochbrechenden Dünnschichtwellenleitern als Sensorplattform, mit einem in der hochbrechenden Schicht modulierten diffraktiven Gitter zur Einkopplung von Anregungslicht, der Einkoppelwinkel für Anregungslicht unterschiedlicher Wellenlänge deutlich unterscheiden. Beispielsweise beträgt für Sensorplattformen mit einer 150 nm dünnen wellenleitenden Schicht aus Ta₂O₅ (n = 2.15 bei 633 nm) auf Glas (n = 1.52 bei 633 nm) und ca. 12 nm tiefen Gittern mit einer Periode von 318 nm der Einkoppelwinkel für Anregungslicht von 492 nm etwa + 18° und von 670 nm etwa -17° (mit Luft als Medium über dem Koppelgitter). Für eine kompakte Bauweise eines optischen Systems ist es jedoch im allgemeinen wenig vorteilhaft, das Anregungslicht verschiedener Lichtquellen aus einer Vielzahl verschiedener Raumrichtungen aus grösserer Entfernung auf ein gemeinsames Ziel zu lenken, anstatt verschiedene Anregungslichtquellen an einem gemeinsamen Ort in einem Modul zusammenzufassen. Für Ausführungsformen des erfindungsgemässen optischen Systems mit beispielsweise Dünnschichtwellenleitern als Sensorplattformen ist es daher vorteilhaft, wenn der Divergenzwinkel zwischen auf unterschiedliche Facetten der optischen Komponente eintreffendem Anregungslicht in dem von besagter optischer Komponente abgehenden Strahlengang um mindestens einen Faktor 1.2, vorzugsweise jedoch um mehr als einen Faktor 1.5, gegenüber dem ursprünglichen Divergenzwinkel vergrössert ist.

Bei besagter optischer Komponente mit mehreren diskreten Facetten zur Strahlumlenkung kann es sich um einen Multifacettenspiegel mit planaren oder gekrümmten, vorzugsweise planaren Facetten handeln.

In einer anderen, bevorzugten Ausführungsform des erfindungsgemässen optischen Systems handelt es sich bei besagter optischer Komponente mit mehreren diskreten Facetten zur Strahlumlenkung um ein Multifacettenprisma mit planaren oder gekrümmten, vorzugsweise planaren Facetten.

Im Zusammenhang mit verschiedenen Anregungslichtquellen gleicher oder unterschiedlicher Wellenlänge sind eine Vielzahl verschiedener Ausführungsformen des optischen Systems möglich. Eine mögliche Ausführungsform besteht darin, dass Licht von zwei oder mehr Anregungsquellen gleicher oder unterschiedlicher Wellenlänge auf die gleiche Facette besagter optischer Komponente zur Strahlumlenkung eintrifft. Eine andere mögliche Ausführungsform ist dadurch gekennzeichnet, dass für jede unterschiedliche Anregungswellenlänge eine eigene Facette besagter optischer Komponente vorgesehen ist, auf der besagtes Anregungslicht eintrifft.

Beim Wechsel zwischen Anregungslichtquellen unterschiedlicher Wellenlänge soll das Ausmass notwendiger Justierungen möglichst niedrig gehalten werden, um einerseits die für die Justiervorgänge notwendige Zeit, in denen das System nicht für die Aufnahme von Messdaten bereitsteht, zu minimieren und andererseits die Grösse der Verfahrwege der mechanischen Justierkomponenten, welche sich direkt auf die Systemkosten auswirken, zu minimieren. Daher wird bevorzugt, dass die Strahlumlenkung von Anregungslicht von unterschiedlicher Wellenlänge in vorgegebene unterschiedliche Richtungen mit einem Versatz der Strahlzentren auf besagter Sensorplattform von weniger als 0.2 mm erfolgt. Zur Erreichung einer hohen Empfindlichkeit in einem Lumineszenznachweisverfahren ist grundsätzlich geboten, die Detektion weitestgehend auf die von dem nachzuweisenden Analyten ausgehenden Lichtsignale zu beschränken und Störsignale, beispielsweise Umgebungslicht, diffus gestreutes oder reflektiertes Anregungslicht von der Signalerfassung auszuschliessen. Daher ist es von Vorteil, wenn ein Multifacettenprisma als optische Komponente zur Strahlumlenkung, als Bestandteil eines erfindungsgemässen optischen Systems, zusätzlich Vorkehrungen umfasst, mit denen Reflexionen des Anregungslichts von der Sensorplattform umgelenkt oder abgeschattet werden. Es können auch eine oder mehrere reflektierende Facetten des Multifacettenprismas teilweise oder ganz verspiegelt sein.

Das erfindungsgemässe optische System kann im optischen Weg des Anregungslichts zwischen der mindestens einen Anregungslichtquelle und der optischen Komponente mit mehreren diskreten Facetten zur Strahlumlenkung zusätzliche optische Elemente zur spektralen Selektion der Anregungswellenlänge, wie beispielsweise Interferenz- oder Kantenfilter, und gegebenenfalls zusätzliche optische Elemente zur Strahlabschwächung, wie beispielsweise optische Neutral- oder Graufilter, gegebenenfalls ausgebildet als Verlaufsfilter mit einem kontinuierlichen Gradienten der Transmission, und / oder weiteren Elementen zur Strahlführung, wie beispielsweise Glasfasern, gegebenenfalls mit damit verbundenen Mikrolinsen oder diffraktiven optischen Elementen, enthalten.

Eine mögliche Ausführungsform des Systems ist dadurch gekennzeichnet, dass als Anregungslichtquellen zwei oder mehr Laser unterschiedlicher Emissionswellenlänge verwendet werden.

Es können zur Erzeugung eines gewünschten Strahlprofils auf der Sensorplattform im Anregungsstrahlengang zwischen den Lichtquellen und der Sensorplattform zusätzliche optische Elemente verwendet werden, welche beispielsweise diffraktive optische Elemente und / oder Linsen zur Strahlaufweitung und / oder Erzeugung eines Parallelstrahls und /oder Blenden oder Masken zur teilweisen Strahlabschattung umfassen.

Eine bevorzugte Ausführungsform des erfindungsgemässen optischen Systems ist dadurch gekennzeichnet, dass die Sensorplattform eine Vielzahl von diskreten Messbereichen umfasst, in denen biologische oder biochemische oder synthetische Erkennungselemente zum Nachweis eines oder mehrerer Analyten immobilisiert sind. Dabei können auf der Sensorplattform in einer 2-dimensionalen Anordnung bis zu 100 000 Messbereiche angeordnet sein. Ein einzelner Messbereich kann eine Fläche von 0.001- 6 mm² einnehmen.

Die einfachste Form der Immobilisierung der biologischen oder biochemischen oder synthetischen Erkennungselemente besteht in physikalischer Adsorption, beispielsweise infolge hydrophober Wechselwirkungen zwischen den Erkennungselementen und der Grundplatte. Diese Wechselwirkungen können jedoch durch die Zusammensetzung des Mediums und dessen physikalisch-chemische Eigenschaften, wie beispielsweise Polarität und Ionenstärke, in ihrem Ausmass stark verändert werden. Insbesondere im Falle sequentieller Zugabe verschiedener Reagentien in einem mehrstufigen Assay ist das Haftvermögen der Erkennungselemente nach rein adsorptiver Immobilisierung auf der Oberfläche oft unzureichend. In einer bevorzugten Ausführungsform des erfindungsgemässen optischen Systems wird das Haftvermögen dadurch verbessert, dass zur Immobilisierung biologischer oder biochemischer oder synthetischer Erkennungselemente auf der Sensorplattform eine Haftvermittlungsschicht aufgebracht ist. Die Haftvermittlungsschicht kann dabei auch, insbesondere im Falle zu immobilisierender biologischer oder biochemischer Erkennungselemente, der Verbesserung der "Biokompatibilität" von deren Umgebung dienen, d.h. der Erhaltung der Bindungsfähigkeit, im Vergleich zu deren natürlicher biologischer oder biochemischer Umgebung, und insbesondere der Vermeidung einer Denaturierung. Es wird bevorzugt, dass die Haftvermittlungsschicht eine Stärke von weniger als 200 nm, vorzugsweise von weniger als 20 nm, hat. Für die Herstellung der Haftvermittlungsschicht eignen sich eine Vielzahl von Materialien. Ohne jegliche Einschränkung wird bevorzugt, dass die Haftvermittlungsschicht eine oder mehrere chemische Verbindungen aus den Gruppen umfasst, die Silane, Epoxide, funktionalisierte, geladene oder polare Polymere und "selbstorganisierte passive oder funktionalisierte Mono- oder Doppelschichten" umfassen.

Ein weiterer wesentlicher Aspekt des erfindungsgemässen optischen Systems ist, dass die biologischen oder biochemischen oder synthetischen Erkennungselemente in räumlich getrennten Messbereichen immobilisiert sind. Diese räumlich getrennten Messbereiche können durch räumlich selektive Aufbringung von biologischen oder biochemischen oder synthetischen Erkennungselementen auf der Sensorplattform erzeugt werden. Für die Aufbringung eignen sich eine Vielzahl bekannter Verfahren. Ohne Beschränkung der Allgemeinheit wird bevorzugt, dass zur Aufbringung der biologischen oder biochemischen oder synthetischen Erkennungselemente auf der Sensorplattform eines oder mehrere Verfahren verwendet werden aus der Gruppe von Verfahren, die von "Ink jet spotting", mechanischem Spotting mittels Stift, Feder oder Kapillare, "micro contact printing", fluidischer Kontaktierung der Messbereiche mit den biologischen oder biochemischen oder synthetischen Erkennungselementen durch deren Zufuhr in parallelen oder gekreuzten Mikrokanälen, unter Einwirkung von Druckunterschieden oder elektrischen oder elektromagnetischen Potentialen" sowie photochemischen und photolithographischen Immobilisierungsverfahren gebildet werden.

Als besagte biologische oder biochemische oder synthetische Erkennungselemente können Komponenten aus der Gruppe aufgebracht werden, die von Nukleinsäuren (beispielsweise DNA, RNA, Oligonukelotiden) oder Nukleinsäure-Analogen (z.B. PNA), mono- oder polyklonalen Antikörpern, Aptameren, synthetischen Peptidstrukturen, löslichen, membrangebundenen und aus einer Membran isolierten Proteinen wie beispielsweise Rezeptoren, deren Liganden, Antigenen für Antikörper, "Histidin-Tag-Komponenten" und deren Komplexbildungspartnern, durch chemische Synthese erzeugten Kavitäten zur Aufnahme molekularer Imprints, gebildet wird. Es ist auch vorgesehen, dass als biologische oder biochemische oder synthetische Erkennungselemente ganze Zellen, Zellbestandteile, Zellmembranen oder deren Fragmente aufgebracht werden.

Die immobilisierten Erkennungselemente sind im allgemeinen so ausgewählt, dass sie mit möglichst hoher Spezifiziät den nachzuweisenden Analyten erkennen und binden. Im allgemeinen ist jedoch zu erwarten, dass auch eine unspezifische Anlagerung von Analytmolekülen an die Oberfläche der Grundplatte stattfindet, insbesondere wenn zwischen den in den Messbereichen immobilisierten Erkennungselemente noch reaktive Freistellen vorhanden sind. Es wird daher bevorzugt, dass Bereiche zwischen den räumlich getrennten Messbereichen zur Minimierung unspezifischer Bindung von Analyten oder deren Nachweissubstanzen "passiviert werden", d.h. dass zwischen den räumlich getrennten Messbereichen gegenüber dem Analyten "chemisch neutrale" Verbindungen aufgebracht sind, vorzugsweise beispielsweise bestehend aus den Gruppen, die von Albuminen, insbesondere Rinderserumalbumin oder Humanserumalbumin, Casein, unspezifischen, polyklonalen oder monoklonalen, artfremden oder empirisch für den oder die nachzweisenden Analyten unspezifischen Antikörpern (insbesondere für Immunoassays), Detergentien - wie beispielsweise Tween 20 -, nicht mit zu analysierenden Polynukleotiden hybridisierender, fragmentierter natürlicher oder synthetischer DNA, wie beispielsweise ein Extrakt von Herings- oder Lachssperma (insbesondere für Polynukleotid-Hybridisierungsassays), oder auch ungeladenen, aber hydrophilen Polymeren, wie beispielsweise Polyethylenglycole oder Dextrane, gebildet werden.

Das erfindungsgemässe optische System ist üblicherweise dadurch gekennzeichnet, dass das Lumineszenzlicht von den Messbereichen auf der Sensorplattform auf mindestens einen optoelektronischen Detektor geleitet wird.

Es wird bevorzugt, dass das Lumineszenzlicht von den Messbereichen auf einen ortsauflösenden Detektor abgebildet wird, welcher vorzugsweise ausgewählt ist aus der Gruppe, die von CCD-Kameras, CCD-Chips, Photodioden-Arrays, Avalanche-Dioden-Arrays, Multichannel-Plates und Vielkanal-Photomultipliern gebildet wird.

Für die Ausgestaltung des Detektionsstrahlenganges gibt es eine Vielzahl von Möglichkeiten. Eine Möglichkeit besteht darin, dass das Lumineszenzlicht von den Messbereichen über ein System aus ein oder mehr Linsen und / oder Spiegeln auf den mindestens einen optoelektronischen Detektor abgebildet wird. Weiterhin ist es möglich, dass sich im Emissionsstrahlengang zwischen der Sensorplattform und dem mindestens einen optoelektronischen Detektor zur Aufzeichnung der von den Messbereichen ausgestrahlten Lumineszenz ein oder mehr optische Elemente, wie beispielsweise diffraktive Elemente, Interferenzfilter oder Kantenfilter, zur Seletion der Emissionswellenlänge und Diskrimination von Licht anderer Wellenlänge befinden.

Es wird bevorzugt, dass der Emissionsstrahlengang am Ort des Einsatzes besagter optischer Elemente zur spektralen Selektion der Emissionswellenlänge eine Divergenz oder Konvergenz von weniger als 15° aufweist. Eine Realisierungsmöglichkeit besteht darin, dass sich die optischen Elemente, wie beispielsweise Interferenzfilter oder Kantenfilter, zur Selektion der Emissionswellenlänge und Diskrimination von Licht anderer Wellenlänge zwischen den zwei Hälften eines Tandem-Objektive befinden.

Für die Ausgestaltung der Sensorplattform, als Bestandteil des erfindungsgemässen optischen Systems, gibt es ebenfalls eine Vielzahl von Möglichkeiten. Die Sensorplattform kann einen optisch transparenten Träger umfassen, vorzugsweise aus Glas oder einem thermoplastischen Kunststoff, auf dem die biologischen oder biochemischen oder synthetischen Erkennungselemente in den Messbereichen immobilisiert sind.

Unter dem Begriff "optische Transparenz" wird dabei verstanden, dass das durch diese Eigenschaft gekennzeichnete Material zumindest bei einer oder mehreren zur Anregung einer oder mehrerer Lumineszenzen benutzten Anregungswellenlängen weitgehend transparent und damit absorptionsfrei sein sollte.

Es wird bevorzugt, dass die Sensorplattform einen planaren optischen Wellenleiter umfasst.

Die Sensorplattform umfasst einen optischen Schichtwellenleiter mit einer ersten optisch transparenten Schicht (a) auf einer zweiten optisch transparenten Schicht (b), wobei die optisch transparente Schicht (b) einen niedrigeren Brechungsindex als die optisch transparente Schicht (a) aufweist.

Die Einkopplung von Anregungslicht in die optisch transparente Schicht (a) erfolgt über in der Schicht (a) modulierte diffraktive Gitter (c). Vorzugsweise handelt es sich bei den in der Schicht (a) modulierten diffraktiven Gittern (c) um Reliefgitter. Eine Sensorplattform als Bestandteil des erfindungsgemässen optischen Systems kann eine einzelne oder auch mehrere diskrete Gitterstrukturen (c) umfassen. Verschiedene in der optisch transparenten Schicht (a) der Sensorplattform modulierte Gitterstrukturen (c) können eine einheitliche Gitterperiode oder auch unterschiedliche Gitterperioden aufweisen.

Eine bevorzugte Ausführungsform der Sensorplattform als Teil des erfindungsgemässen optischen Systems ist dadurch gekennzeichnet, dass Gitterstrukturen (c) in der wellenleitenden Schicht (a) der Sensorplattform in einem ein- oder zwei dimensionalen Array angeordnet sind, woran sich jeweils in Ausbreitungsrichtung des einzukoppelnden Anregungslichts unstrukturierte Bereiche der wellenleitenden Schicht (a) anschliessen, auf denen Arrays von 2 oder mehr Messbereichen angeordnet sind, welche gegebenenfalls zusätzlich fluidisch dichtend gegeneinander in diskreten Probenbehältnissen abgeschlossen werden können.

Um eine gezielte Ableitung des in die Schicht (a) einer Sensorplattform eingekoppelten und in ihr geführten Anregungslichts zu ermöglichen und auch ein Übersprechen von Lichtsignalen zwischen benachbarten Messbereichen oder Arrays von Messbereichen zu minimieren ist es von Vorteil, wenn auf der Sensorplattform zusätzlich zu Gitterstrukturen (c) zur Einkopplung von Anregungslicht zweite Gitterstrukturen (c) zur Auskopplung von Anregungslicht und gegebenenfalls in die wellenleitende Schicht (a) rückgekoppelten Lumineszenzlichts vorgesehen sind, um das in der wellenleitenden Schicht (a) geführte Licht, nach Durchlaufen der Messbereiche (in Ausbreitungsrichtung des geführten Anregungslichts im Anschluss an eine Einkoppelgitterstruktur (c)) wieder auszukoppeln. Dabei können Gitterstrukturen (c) und (c') gleiche oder auch unterschiedliche Gitterperioden aufweisen.

Eine mögliche Ausführungsform ist dadurch gekennzeichnet, dass Gitterstrukturen (c) und gegebenenfalls (c') diskret für einzelne Segmente (Anordnungen in ein- oder zweidimensionalen Arrays) von Messbereichen angeordnet sind.

Es wird bevorzugt, dass Gitterstrukturen (c) und gegebenenfalls (c') senkrecht zur Ausbreitungsrichtung des einzukoppelnden Anregungslichts in durchgehenden Streifen (Spalten) über die ganze Sensorplattform ausgebildet sind.

Eine mögliche Ausführungsform, insbesondere für sequentielle Messungen, ist dadurch gekennzeichnet, dass Gitterstrukturen (c') in sequentieller Durchführung von Messungen auch als Einkoppelgitter (c) verwendet werden.

Für bestimmte Anwendungen, insbesondere um eine sehr hohe Dichte von Messbereichen ohne ein optisches Übersprechen davon ausgehender Lumineszenzen zu erreichen, wird bevorzugt, dass Gitterstrukturen (c) zur Einkopplung und (c') zur Auskopplung von Licht aus der wellenleitenden Schicht (a) der Sensorplattform gleiche Periode haben und durchgehend unter allen Messbereichen der Sensorplattform moduliert sind.

Bei einer gegebenen Schichtdicke der optisch transparenten Schicht (a) ist die Empfindlichkeit einer erfindungsgemässen Anordnung um so grösser, je höher der Unterschied des Brechungsindex der Schicht (a) zu den Brechungsindices der umgehenden Medien ist, d.h. je höher der Brechungsindex der Schicht (a) im Verhältnis zu den benachbarten Schichten ist. Es wird bevorzugt, dass der Brechungsindex der ersten optisch transparenten Schicht (a) grösser als 1.8 ist.

Eine weitere wichtige Anforderung an die Eigenschaften der Schicht (a) besteht darin, dass die Ausbreitungsverluste darin geführten Lichts möglichst niedrig sind. Es wird bevorzugt, dass die erste optisch transparente Schicht (a) ein Material aus der Gruppe von TiO₂ ZnO, Nb₂O₅, Ta₂O₅, HfO₂, oder ZrO₂, besonders bevorzugt aus TiO₂ oder Ta₂O₅ oder Nb₂O₅ umfasst. Es können auch Kombinationen mehrerer derartiger Materialien verwendet werden.

Bei gegebenem Material der Schicht (a) und gegebenem Brechungsindex ist die Empfindlichkeit bis zu einem unteren Grenzwert der Schichtdicke umso grösser, je geringer die Schichtdicke ist. Der untere Grenzwert wird bestimmt durch den Abbruch der Lichtleitung bei Unterschreiten eines von der Wellenlänge des zu führenden Lichts abhängigem Wert sowie einem zu beobachtenden Anstieg der Ausbreitungsverluste bei sehr dünnen Schichten mit weiterer Schichtdickenabnahme. Es ist von Vorteil, wenn das Produkt aus der Dicke der Schicht (a) der Sensorplattform und ihrem Brechungsindex ein Zehntel bis ein Ganzes, bevorzugt ein Drittel bis zwei Drittel, der Anregungswellenlänge eines in die Schicht (a) einzukoppelnden Anregungslichts beträgt.

Eine spezielle Ausführungsform der Sensorplattform als Teil des erfindungsgemässen optischen Systems ist dadurch gekennzeichnet, dass zwischen der optisch transparenten schicht (a) der Sensorplattform und den immobilisierten biologischen oder biochemischen oder synthetischen Erkennungselementen eine dünne Metallschicht, vorzugsweise aus Gold oder Silber, gegebenenfalls auf einer zusätzlichen dielektrischen Schicht mit niedrigerem Brechungsindex als der Schicht (a), beispielsweise aus Silica oder Magnesiumfluorid, aufgebracht ist, wobei die Dicke der Metallschicht und der eventuellen weiteren Zwischenschicht so ausgewählt ist, dass ein Oberflächenplasmon bei der Anregungswellenlänge und / oder der Lumineszenzwellenlänge angeregt werden kann.

Es wird bevorzugt, dass auf einer Sensorplattform als Teil des erfindungsgemässen optischen Systems optisch oder mechanisch erkennbare Markierungen zur Erleichterung der Justierung in einem optischen System und / oder zur Verbindung mit Probenbehältnissen als Teil eines analytischen Systems und / oder als Hilfsmittel für eine nachfolgende Bildauswertung aufgebracht sind.

Für die routinemässige Handhabung einer Vielzahl von Sensorplattformen in möglicherweise unterschiedlichen Ausführungsformen, ebenso wie für die Gewährleistung einer gleichbleibenden hohen Produktqualität ist die Rückverfolgbarkeit der Herstellungs- und Gebrauchsgeschichte von grosser Bedeutung. Daher wird bevorzugt, dass die Sensorplattform, als Teil des erfindungsgemässen optischen Systems, eine Kennzeichnung, beispielsweise in Form eines Barcodes, trägt, der von einem in das optische System integrierten Barcode-Reader abgelesen werden kann.

Eine Vielzahl weiterer Ausführungsformen von Sensorplattformen, welche sich als Bestandteil eines erfindungsgemässen optischen Systems eignen, sind ausführlich beispielsweise in den Patenten US 5,822,472, US 5,959,292 und US 6,078,705 sowie in den Patentanmeldungen WO 96/35940, WO 97/37211, WO 98/08077, WO 99/58963, PCT/EP 00/04869 und PCT/EP 00/07529 beschrieben. Die darin beschriebenen Ausführungsformen von Sensorplattformen und Verfahren zum Lumineszenznachweis eines oder mehrerer Analyten, unter Verwendung eines erfindungsgemässen optischen Systems, sind ebenfalls Gegenstand der vorliegenden Erfindung.

Grundsätzlich kann ein erfindungsgemässes optisches System sowohl mit monochromatischen als auch mit polychromatischen Lichtquellen betrieben werden. Es wird jedoch bevorzugt, dass das Anregungslicht der zwei oder mehr Lichtquellen jeweils im wesentlichen monochromatisch ist.

Eine spezielle Ausführungsform des erfindungsgemässen optischen Systems ist dadurch gekennzeichnet, dass das Anregungslicht verschiedener Lichtquellen gleichzeitig aus verschiedenen Richtungen auf die Sensorplattform eingestrahlt wird, wobei der Versatz zwischen den Strahlzentren auf der Sensorplattform weniger als 0.2 mm beträgt.

Der Detektionsstrahlengang des erfindungsgemässen optischen Systems kann so gestaltet sein, dass zwischen der Sensorplattform und dem einen oder mehreren Detektoren optische Komponenten aus der Gruppe verwendet werden, die von Linsen oder Linsensystemen zur Formgestaltung der übertragenen Lichtbündel, planaren oder gekrümmten Spiegeln zur Umlenkung und gegebenenfalls zusätzlich zur Formgestaltung von Lichtbündeln, Prismen zur Umlenkung und gegebenenfalls zur spektralen Aufteilung von Lichtbündeln, dichroischen Spiegeln zur spektral selektiven Umlenkung von Teilen von Lichtbündeln, Neutralfiltern zur Regelung der übertragenen Lichtintensität, optischen Filtern oder Monochromatoren zur spektral selektiven Übertragung von Teilen von Lichtbündeln oder polarisationsselektiven Elementen zur Auswahl diskreter Polarisationsrichtungen des Anregungs- oder Lumineszenzlichts gebildet werden.

Die Lichtanregung kann kontinuierlich erfolgen. Es wird jedoch bevorzugt, dass die Einstrahlung des Anregungslichts in Pulsen mit einer Dauer zwischen 1 fsec und 10 Minuten erfolgt.

Eine Weiterentwicklung des erfindungsgemässen optischen Systems ist dadurch gekennzeichnet, dass das Emissionslicht aus den Messbereichen zeitlich aufgelöst gemessen wird.

Es wird bevorzugt, dass zur Referenzierung Lichtsignale aus der Gruppe gemessen werden, die von Anregungslicht am Ort der Lichtquellen oder nach ihrer Aufweitung oder nach ihrer Unterteilung in Teilstrahlen, Streulicht bei der Anregungswellenlänge aus dem Bereich der einen oder mehreren räumlich getrennten Messbereiche, und über gegebenenfalls vorhandene Gitterstrukturen (c) oder (c') neben den Messbereichen ausgekoppeltem Licht der Anregungswellenlänge gebildet werden. Dabei können die Messbereiche zur Bestimmung des Emissionslichts und des Referenzsignals ganz oder teilweise überlappen, wobei sie vorzugsweise identisch sind.

Da der Anregungsstrahlengang des erfindungsgemässen optischen Systems im Bereich bis zum Auftreffen des Anregungslichts auf die vorangehend genannte optische Komponente mit mehreren diskreten Facetten zur Strahlumlenkung im allgemeinen mit der Montage der optischen Komponenten festgelegt wird und danach, abgesehen von beispielsweise thermisch verursachten geringfügigen Veränderungen im wesentlichen unveränderlich ist, ist es auch möglich, zu Zwecken der Referenzierung die Verteilung des Anregungslichtes im Strahlengang vor der besagten Komponente zur Strahlumlenkung einmalig zu vermessen und als eine Gerätefunktion abzuspeichern, welche wie ein Referenzsignal in einer Datenkorrektur berücksichtigt werden kann. Im Bedarfsfall kann die Vermessung dieser Anregungslichtverteilung in geeigneten Zeitabständen wiederholt und als eine neue gerätefunktion abgespeichert werden.

Bei genauer Kenntnis des Abstrahlprofils der Lichtquellen und der optischen Eigenschaften der im Strahlengang verwendeten Komponenten ist es sogar möglich, die Verteilung des Anregungslichts mathematisch zu berechnen und als eine Gerätefunktion abzuspeichern, welche wie ein Referenzsignal in einer Datenkorrektur berücksichtigt werden kann.

Wie vorangehend beschrieben, weisen Sensorplattformen basierend auf Dünnschichtwellenleitern und Einkopplung des Anregungslichts mithilfe eines in der wellenleitenden Schicht modulierten diffraktiven Gitters einen Resonanzwinkel mit einer nur sehr kleinen Halbwertsbreite für die Einkopplung auf. Insbesondere für Ausführungsformen des erfindungsgemässen optischen Systems mit derartigen Sensorplattformen ist es vorteilhaft, wenn die Optimierung der Justierung für optimale Einkopplung von Anregungslicht über ein Einkoppelgitter (c) zu in Ausbreitungsrichtung des eingekoppelten Lichts befindlichen Messbereichen durch Maximierung des von einem Detektor erfassten und über ein Auskoppelgitter (c') ausgekoppelten Anregungslichts erfolgt, wobei diese Optimierung bevorzugt rechnergesteuert erfolgt.

Eine besondere Ausführungsform des erfindungsgemässen optischen Systems ist dadurch gekennzeichnet, dass zur Optimierung der Justierung des Koppelwinkels eine Rotation der optischen Komponente mit mehreren diskreten Facetten zur Strahlumlenkung um eine innerhalb oder ausserhalb dieser optischen Komponente gelegene Achse erfolgt. Dabei wird bevorzugt, dass die optische Komponente mit mehreren diskreten Facetten zur Strahlumlenkung an ein Rotationselement mit Drehachse innerhalb oder ausserhalb dieser optischen Komponente derart montiert ist, dass bei einer Rotation der Komponente um besagte Drehachse von weniger als 5° der Strahlversatz auf der Sensorplattform weniger als 0.3 mm beträgt.

Eine Vielzahl von möglichen Ausführungsformen des erfindungsgemässen optischen Systems sind dadurch gekennzeichnet, dass zur Optimierung der Koppelposition auf der Sensorplattform eine Translation der Sensorplattform parallel oder senkrecht zu den Gitterlinien erfolgt.

Es wird bevorzugt, dass die Optimierung der Justierung mittels Maximierung von einem oder mehreren Referenzsignalen von einem oder mehreren Messbereichen auf der Sensorplattform erfolgt, wobei diese Optimierung vorzugsweise rechnergesteuert erfolgt. Eine mögliche Ausführungsform ist dabei dadurch gekennzeichnet, dass es sich bei besagtem Referenzsignal um Streulicht bei der Anregungswellenlänge handelt. Es ist aber auch möglich, dass es sich bei besagtem Referenzsignal um Lumineszenzlicht aus für Zwecke der Referenzierung und / oder Justierung vorgesehenen Messbereichen handelt.

In einer Ausführungsform des erfindungsgemässen optischen Systems erfolgen Einstrahlung und Erfassung des Emissionslichts von einer Vielzahl von Messbereichen oder einem oder mehreren Arrays von Messbereichen oder sogar allen Messbereichen simultan. Eine andere Ausführungsform ist dadurch gekennzeichnet, dass die Einstrahlung des Anregungslichts auf und Detektion des Emissionslichts von einem oder mehreren Messbereichen sequentiell für einzelne oder mehrere Messbereiche erfolgt.
Es ist auch möglich, dass mehrfach sequentiell Einstrahlung des Anregungslichts und Detektion des Emissionslichts von einem oder mehreren Messbereichen erfolgen.

Bei sequentieller Detektion der Lumineszenz von verschiedenen Messbereichen ist ein ortsauflösender Detektor nicht zwingend erforderlich, sondern es kann in diesem Falle ein einfacher Detektor wie beispielsweise ein herkömmlicher Photomultiplier oder eine Photodiode oder eine Avalanche-Photodiode verwendet werden.

Eine andere Ausführungsform eines erfindungsgemässen optischen Systems mit sequentieller Anregung und Detektion ist dadurch gekennzeichnet, dass die erfindungsgemässe Anordnung zwischen Schritten der sequentiellen Anregung und Detektion bewegt wird.

Ein weiterer Gegenstand der Erfindung ist ein analytisches System zum Lumineszenznachweis eines oder mehrerer Analyten in mindestens einer Probe auf einem oder mehreren Messbereichen auf einer Sensorplattform mit einem erfindungsgemässen optischen System nach einer der vorgenannten Ausführungsformen sowie Zuführungsmitteln, um die eine oder mehrere Proben mit den Messbereichen auf der Sensorplattform in Kontakt zu bringen.

Dabei wird bevorzugt, dass das erfindungsgemässe analytische System zusätzlich ein oder mehrere Probenbehältnisse umfasst, welche mindestens im Bereich der einen oder mehreren Messbereiche oder der zu Segmenten zusammengefassten Messbereiche zur Sensorplattform hin geöffnet sind. Dabei können die Probenbehältnisse jeweils ein Volumen von 0.1 nl -100 µl haben.

Eine bevorzugte Ausführungsform des erfindungsgemässen analytischen Systems ist dadurch gekennzeichnet, dass die Probenbehältnisse auf der von der optisch transparenten Schicht (a) abgewandten Seite, mit Ausnahme von Ein- und / oder Auslassöffnungen für die Zufuhr oder den Auslass der Proben und gegebenenfalls zusätzlicher Reagentien, geschlossen sind und die Zufuhr oder der Auslass von Proben und gegebenenfalls zusätzlicher Reagentien in einem geschlossenen Durchflusssystem erfolgen, wobei im Falle der Flüssigkeitszufuhr zu mehreren Messbereichen oder Segmenten mit gemeinsamen Einlass- und Auslassöffnungen diese bevorzugt spalten- oder zeilenweise addressiert werden.

Eine andere mögliche Ausführungsform besteht darin, dass die Zufuhr der Proben und gegebenenfalls zusätzlichen Reagentien in parallelen oder gekreuzten Mikrokanälen, unter Einwirkung von Druckunterschieden oder elektrischen oder elektromagnetischen Potentialen erfolgt.

Eine weitere bevorzugte Ausführungsform des erfindungsgemässen analytischen Systems ist dadurch gekennzeichnet, dass die Probenbehältnisse auf der von der optisch transparenten Schicht (a) abgewandten Seite Öffnungen zur lokal addressierten Zugabe oder Entfernung der Proben oder anderer Reagentien besitzen.

Es wird bevorzugt, dass die Probenbehältnisse in einem Array angeordnet sind, umfassend die Sensorplattform als Grundplatte und einen damit derart zusammengebrachten Körper, dass zwischen der Grundplatte und besagtem Körper ein Array von räumlichen Aussparungen zur Erzeugung eines Arrays von gegeneinander fluidisch abgedichteten Flusszellen mit jeweils mindestens einem Zulauf und mindestens einem Ablauf erzeugt wird und dass mindestens ein Ablauf jeder Flusszelle in ein mit dieser Flusszelle fluidisch verbundenes Reservoir führt, welches aus der Flusszelle austretende Flüssigkeit aufnimmt. Vorteilhaft ist dabei, wenn das Reservoir zur Aufnahme aus der Flusszelle austretender Flüssigkeit als eine Vertiefung in der Aussenwand des mit der Grundplatte zusammengebrachten Körpers ausgebildet ist.

Das erfindungsgemässe analytische System kann prinzipiell eine nahezu beliebige Anzahl von Probenbehältnissen umfassen, typischerweise 2 - 2000, vorzugsweise 2 - 400, besonders bevorzugt 2 -100 Probenbehältnisse.

Es wird bevorzugt, dass das Raster (Aufeinanderfolge in Zeilen und / oder Spalten) der Zuläufe der Probenbehältnisse dem Raster der Wells einer Standardmikrotiterplatte entspricht.

Ausserdem wird bevorzugt, dass die Anordnung von Probenbehältnissen mit der Sensorplattform als Grundplatte und dem damit zusammengebrachten Körper die Grundabmessungen (Footprint) einer Standardmikrotiterplatte hat.

Eine andere Ausführungsform des erfindungsgemässen analytischen Systems, mit beispielsweise 2 bis 8 Probenbehältnissen in einer Spalte oder beispielsweise 2 bis 12 Probenbehältnissen in einer Zeile, ist dadurch gekennzeichnet, dass diese ihrereseits mit einem Träger ("Metaträger") mit den Abmessungen von Standardmikrotiterplatten derart zusammengefügt werden, dass das Raster (Aufeinanderfolge in Zeilen oder Spalten) der Zuläufe der Flusszellen dem Raster der Wells einer Standardmikrotiterplatte entspricht.

Eine Weiterentwicklung des erfindungsgemässen analytischen Systems ist dadurch gekennzeichnet, dass unterhalb der Sensorplattform als Grundplatte einer Anordnung von Probenbehältnissen ein entfernbarer Schutzboden angeordnet ist und gegebenenfalls die Oberseite der Anordnung von Probenbehältnissen durch einen zusätzlichen Abschluss, beispielsweise eine Folie, Membran oder eine Deckplatte, abgeschlossen wird. Dabei wird bevorzugt, dass der Schutzboden vor einer Messung automatisch oder halbautomatisch entfernt wird.

Eine bevorzugte Ausführungsform des erfindungsgemässen analytischen Systems, umfassend eine der vorgenannten Ausführungsformen eines optischen Systems mit einem Dünnschichtwellenleiter als Sensorplattform und einem oder mehreren in der wellenleitenden Schicht modulierten Gitter zur Einkopplung von Anregungslicht, ist dadurch gekennzeichnet, dass sich innerhalb jedes Probenbehältnisses mindestens eine in der wellenleitenden Schicht (a) einer Sensorplattform als Grundplatte modulierte Gitterstruktur (c) zur Einkopplung von Anregungslicht zu den Messbereichen befindet.

Eine mögliche Ausführungsform besteht dabei darin, dass sich Gitterstrukturen (c) innerhalb des Bereichs der Probenbehältnisse und zusätzliche Gitterstrukturen (c') zur Auskopplung sich jeweils ausserhalb der Probenbehältnisse befinden, in denen jeweils die Einkopplung des Anregungslichts erfolgt.

Eine andere mögliche Ausführungsform des erfindungsgemässen analytischen Systems ist dadurch gekennzeichnet, dass sich Gitterstrukturen (c) und gebenenfalls zusätzlich vorhandene Gitterstrukturen (c') über den Bereich mehrerer oder alle Probenbehältnisse erstrecken.

Es wird bevorzugt, dass sich in einem Probenbehältnis 5 - 5000, bevorzugt 10 - 400 Messbereiche befinden.

Eine Weiterentwicklung des erfindungsgemässen analytischen Systems ist dadurch gekennzeichnet, dass sie zusätzlich mechanische Vorkehrungen und einen Transportmechanismus umfasst, womit ein automatisierter Transport einer Anordnung von Probenbehältnissen, bestehend aus einer Sensorplattform als Grundplatte und einem damit zusammengebrachten Körper, vom Ort der Eingabe zur Position der Lumineszenzanregung und -detektion und gegebenenfalls zurück zur Ausgangsposition erfolgt.

Eine andere Weiterentwicklung besteht darin, dass sie zusätzlich eine Aufnahmevorrichtung ("Stacker") zur Aufnahme einer Vielzahl von Anordnungen von Probenbehältnissen umfasst.

Dabei wird bevorzugt, dass die Beladung des "Stackers" vom Ort der Eingabe der Anordnung von Probenbehältnissen und von dort deren Transport zur Position der Lumineszenzanregung und -detektion und gegebenenfalls zurück zur Ausgangsposition automatisch erfolgen.

Eine andere Ausführungsform des erfindungsgemässen analytischen Systems ist dadurch gekennzeichnet, dass es eine oder mehrere thermostatisierbare Zonen umfasst. Bevorzugt wird dabei, dass die Anordnung von Probenbehältnissen und / oder der Anregungslichtquellen und / oder des einen oder der mehreren optoelektronischen Detektoren und / oder des "Stackers" separat thermostatisiert werden können. Beispielsweise wird damit die Möglichkeit eröffnet, biologische Proben bis zum Zeitpunkt einer Messung zu kühlen und damit einen möglichen Abbau der Inhaltsstoffe zu verhindern oder zu vermindern. Auch die Signalstabilität optoelektronischer Geräte wird durch eine Thermostatisierung grundsätzlich positiv beeinflusst.

Eine andere Variante des erfindungsgemässen analytischen Systems ist dadurch gekennzeichnet, dass die Anordnung von Probenbehältnissen und / oder der Anregungslichtquellen und / oder des einen oder der mehreren optoelektronischen Detektoren und / oder des "Stackers" bei einem höheren Luftdruck als dem Umgebungsdruck betrieben wird. Damit kann beispielsweise vorteilhaft das Eindringen von Staub in das System vermindert werden.

Für die verschiedenen Ausführungsformen des erfindungsgemässen analytischen Systems wird bevorzugt, dass es zusätzliche eine oder mehrere elektronische Kontrollkomponenten zur Überwachung des Zustandes einer oder mehrerer optischer oder elektrischer oder mechanischer Komponenten umfasst, welche gegebenenfalls ein optisches oder akustisches oder elektronisches Alarmsignal erzeugen können.

Vorteilhaft ist ausserdem, wenn ein erfindungsgemässes analytisches System Vorkehrungen umfasst, mit denen eine Eingabe ungeeigneter Sensorplatt-formen, beispielsweise mit falschen mechanischen Abmessungen, verhindert wird.

Für die Durchführung einer Vielzahl von Untersuchungen und Messungen und zur Verbesserung von deren Reproduzierbarkeit ist grundsätzlich ein hoher Automatisierungsgrad wünschenswert. Es wird bevorzugt, dass das erfindungsgemässe analytische System zusätzlich einen oder mehrere elektronische Prozessoren, verbunden mit Speichermedien und elektronischen Zuleitungsmedien, eine Eingabetastatur, einen Bildschirm und einen Programmcode zur automatisierten Steuerung umfasst.

Vor allem für routinemässige Arbeitsvorgänge wird weiterhin bevorzugt, dass der Betrieb besagten analytischen Systems und / oder die Messvorgänge automatisch mittels vorgegebener Initialisierungsdateien erfolgt. Vorteilhaft ist, wenn das erfindugsgemässe analytische System nach einer angezeigten Fehlfunktion automatisch in einen definierten Anfangszustand versetzt wird und gegebenenfalls erzeugte Messdaten in einer Datei gesichert werden.

Eine Weiterentwicklung des erfindungsgemässen analytischen Systems ist dadurch gekennzeichnet, dass in automatisierter Form für jede Messung eine Datei erzeugt wird, in der die Kennzeichnung der verwendeten Sensorplattform und die wesentlichen Parameter besagter Messung sowie die Messdaten abgespeichert werden.

Eine andere vorteilhafte Weiterentwicklung bessteht darin, dass lokale Variationen der Anregungslichtintensität auf der Sensorplattform und / oder der Detektionsempfindlichkeit des optischen Systems für Lichtsignale von unterschiedlichen Orten auf der Sensorplattform nach Aufnahme der Originaldaten korrigiert werden mittels Vorkehrungen, welche beispielsweise die Aufnahme von Korrekturbildem bei der Anregungswellenlänge und /oder einer oder mehrerer Lumineszenzwellenlängen, die Berechnung von theoretischen Verteilungen der verfügbaren Anregungslichtintensität, theoretische Berechnungen der ortsaufgelösten Effizienz des optischen Abbildungs- und Detektionssystems etc. umfassen.

Ein weiterer Gegenstand der Erfindung ist ein Verfahren zum Lumineszenznachweis eines oder mehrerer Analyten, unter Verwendung eines erfindungsgemässen analytischen Systems, welches ein erfindungsgemässes optisches System umfasst, dadurch gekennzeichnet, dass eine oder mehrere flüssige Proben, welche auf den einen oder die mehreren Analyten untersucht werden sollen, mit einem oder mehreren Messbereichen auf der Sensorplattform in Kontakt gebracht werden, Anregungslicht in die Messbereiche geleitet wird, hierbei lumineszenzfähige Stoffe in den Proben oder auf den Messbereichen zur Lumineszenz angeregt und die abgestrahlte Lumineszenz gemessen wird.

Bestandteil des erfindungsgemässen Verfahrens ist, dass zur Erzeugung der Lumineszenz mindestens ein Lumineszenzfarbstoff oder lumineszentes Nanopartikel als Lumineszenzlabel verwendet wird, das bei einer Wellenlänge zwischen 300 nm und 1100 nm angeregt werden kann und emittiert.

Eine vorteilhafte Ausführungsform des Verfahrens ist dadurch gekennzeichnet, dass es Vorkehrungen umfasst, mit denen der dynamische Bereich der Signalaufnahme um mindestens einen Faktor 3 erweitert wird.

Die besagten Vorkehrungen zur Erweiterung des dynamischen Bereichs können beispielsweise die Verwendung von unterschiedlich langen Belichtungszeiten, d.h. der Dauer der Einstrahlung des Anregungslichts und der Integrationszeit des Detektors, umfassen, welche sich mindestens um einen Faktor 3 unterscheiden.

Eine andere Möglichkeit besteht darin, dass die Vorkehrungen zur Erweiterung des dynamischen Bereichs eine Variation der Intensität des auf der Sensorplattform verfügbaren Anregungslichts um mindestens einen Faktor 3 umfassen, beispielsweise durch Einsatz von diskreten Neutralfiltern im Anregungsstrahlengang, gegebenenfalls ausgebildet als Verlaufsfilter mit einem kontinuierlichen Gradienten der Transmission oder Variation der Intensität der Lichtquellen oder Änderung der Justierung der Sensorplattform bezüglich des Anregungsstrahlenganges.

Das erfindungsgemässe Verfahren ist im allgemeinen dadurch gekennzeichnet, dass das mindestens eine Lumineszenzlabel an den Analyten oder in einem kompetitiven Assay an einen Analogen des Analyten oder in einem mehrstufigen Assay an einen der Bindungspartner der immobilisierten biologischen oder biochemischen oder synthetischen Erkennungselementen oder an die biologischen oder biochemischen oder synthetischen Erkennungselementen gebunden ist.

Eine Weiterentwicklung des Verfahrens ist dadurch gekennzeichnet, dass ein zweites oder noch weitere Lumineszenzlabel mit gleicher oder unterschiedlicher Anregungswellenlänge wie das erste Lumineszenzlabel und gleicher oder unterschiedlicher Emissionswellenlänge verwendet werden.

Eine weitere Möglichkeit zur Ausführung des erfindungsgemässen Verfahrens ist dadurch gekennzeichnet, dass zum Nachweis des Analyten Ladungs- oder optischer Energietransfer von einem als Donor dienenden ersten Lumineszenzfarbstoff zu einem als Akzeptor dienenden zweiten Lumineszenzfarbstoff verwendet wird.

Eine andere vorteilhafte Ausführungsform des Verfahrens ist dadurch gekennzeichnet, dass die einen oder mehreren Lumineszenzen und / oder Bestimmungen von Lichtsignalen bei der Anregungswellenlänge polarisationsselektiv vorgenommen werden. Es wird bevorzugt, dass die einen oder mehreren Lumineszenzen bei einer anderen Polarisation als der des Anregungslichts gemessen werden.

Das erfindungsgemässe Verfahren ist geeignet zur gleichzeitigen oder sequentiellen, quantitativen oder qualitativen Bestimmung eines oder mehrerer Analyten aus der Gruppe von Antikörpern oder Antigenen, Rezeptoren oder Liganden, Chelatoren oder "Histidin-tag-Komponenten", Oligonukleotiden, DNA- oder RNA-Strängen, DNA- oder RNA-Analoga, Enzymen, Enzymcofaktoren oder Inhibitoren, Lektinen und Kohlehydraten.

Mögliche Ausführungsformen des Verfahrens sind auch dadurch gekennzeichnet, dass die zu untersuchenden Proben natürlich vorkommende Körperflüssigkeiten wie Blut, Serum, Plasma, Lymphe oder Urin oder Eigelb oder optisch trübe Flüssigkeiten oder Gewebeflüssigkeiten oder Oberflächenwasser oder Boden- oder Pflanzenextrakte oder Bio- oder Syntheseprozessbrühen oder aus biologischen Gewebeteilen oder aus Zellkulturen oder -extrakten entnommen sind.

Weiterer Gegenstand der Erfindung ist die Verwendung eines erfindungsgemässen optischen Systems und / oder eines erfindungsgemässen analytischen Systems und / oder eines erfindungsgemässen Verfahrens zu quantitativen oder qualitativen Analysen zur Bestimmung chemischer, biochemischer oder biologischer Analyten in Screeningverfahren in der Pharmaforschung, der Kombinatorischen Chemie, der Klinischen und Präklinischen Entwicklung, zu Echtzeitbindungsstudien und zur Bestimmung kinetischer Parameter im Affinitätsscreening und in der Forschung, zu qualitativen und quantitativen Analytbestimmungen, insbesondere für die DNA- und RNA-Analytik, für die Erstellung von Toxizitätsstudien sowie für die Bestimmung von Gen- oder Protein-Expressionsprofilen sowie zum Nachweis von Antikörpern, Antigenen, Pathogenen oder Bakterien in der pharmazeutischen Protduktentwicklung und -forschung, der Human- und Veterinärdiagnostik, der Agrochemischen Produktentwicklung und -forschung, der symptomatischen und präsymptomatischen Pflanzendiagnostik, zur Patientenstratifikation in der pharmazeutischen Produktentwicklung und für die therapeutische Medikamentenauswahl, zum Nachweis von Pathogenen, Schadstoffen und Erregern, insbesondere von Salmonellen, Prionen, Viren und Bakterien, in der Lebensmittel- und Umweltanalytik.

Die nachfolgenden Ausführungsbeispiele erläutern die Erfindung beispielhaft.

### Beispiel 1:

### 1A: Sensorplattform

Es wird eine Sensorplattform mit den äusseren Abmessungen 75 mm Breite x 113.5 mm Länge x 0.7 mm Dicke verwendet, auf deren Fläche durch Kombination mit einer Platte aus Polycarbonat mit in Richtung der Sensorplattform offenen Ausnehmungen mit den Innendimensionen 8 mm Breite x 8 mm Länge x 0.15 mm Höhe 96 Mikroflusszellen im Raster einer klassischen Mikrotiterplatte (Raster 9 mm) erzeugt werden können. Die Polycarbonat-Platte kann mit der Sensorplattform derart verklebt werden, dass danach die Ausnehmungen gegeneinander dicht verschliessend abgedichtet sind.

Das Substratmaterial (optisch transparente Schicht (b) besteht aus AF 45 Glas (Brechungsindex n = 1.52 bei 633 nm). Im Substrat ist ein Raster von Paaren aus Ein- und Auskoppelgittern mit parallel zur Breite der Sensorplattform verlaufenden Gitterlinien (318 nm Periode) von 12 +/- 3 nm Gittertiefe ausgeprägt, wobei die Gitterlinien über die gesamte Breite der Sensorplattform ausgeprägt sind. Der Abstand zwischen aufeinanderfolgenden Gitterpaaren beträgt 9 mm, die Länge der einzelnen Gitterstrukturen (parallel zur Länge der Sensorplattform) 0.5 mm. Der Abstand zwischen dem Ein- und Auskoppelgitter eines Gitterpaares beträgt 9 mm, so dass die Ein- und Auskopplung des Anregungslichts jeweils innerhalb des Bereichs der Probenbehältnisse, nach Kombination der Sensorplattform mit der oben beschriebenen Polycarbonatplatte, erfolgen kann. Die wellenleitende, optisch transparente Schicht (a) aus Ta₂O₅ auf der optisch transparenten Schicht (b) hat einen Brechungsindex von 2.15 bei 633 nm (Schichtdicke 150 nm).

Die von der Sensorplattform und der damit kombinierten Polycarbonatplatte gebildeten Probenbehältnisse weisen auf den der Sensorplattform gegenüberliegenden Begrenzungsflächen konisch ausgebohrte Öffnungen auf, so dass eine Befüllung oder Entleerung der Probenbehältnisse durch Einpressen von standardisierten, kommerziell erhältlichen Pipettenspitzen aus Polypropylen erfolgen kann.

Zur Vorbereitung auf die Immobilisierung der biochemischen oder biologischen oder synthetischen Erkennungselemente wird die Sensorplattformen mit Chloroform im Ultraschallgerät gereinigt und mittels einer Silanisierungsreaktion mit Glycidyloxypropyltrimethoxysilan chemisch aktiviert und so zur Immobilisierung der Probe cDNA's als biologische Erkennungselemente vorbereitet. Die einzelnen cDNAs in einer Konzentration von 50 ng/µl werden mittels einer kommerziellen piezogesteuerten Mikropipette (GeSiM GmbH, Großerkmannsdorf, DE) mit jeweils 10 Tropfen zu 0.1 nl auf einen Punkt aufgebracht, was zu Spotdurchmessern als diskreten Messbereichen von ca. 150 µm führt. In einer 10 x 10 Spot-Anordnung (100-Feature-Array) werden jeweils 4 Messbereiche mit gleicher cDNA erzeugt, so dass am Ende des Immobilisierungsvorganges ein Array jeweils Messbereiche mit 25 verschiedenen Erkennungselementen in vierfacher Replikation enthält. Die Spots weisen einen Abstand der Spotmittelpunkte von 400 µm auf. Ein einzelnes Array belegt somit eine Fläche von etwa 4 x 4 mm auf der Sensorplattform, wobei dieses in geringem Abstand (ca. 2 mm) zu einer Gitterstruktur (c) angeordnet ist, welche im später auszuführenden analytischen Nachweisverfahren als Einkoppelgitter für das Anregungslicht dient. Zur späteren Untersuchung einer Vielzahl von Proben auf gleichartigen Arrays werden eine Vielzahl gleichartiger Arrays wie vorangehend beschrieben in einem Raster von 9 mm auf der Sensorplattform erzeugt.

Auf die so vorbereitete Sensorplattform wird die beschriebene Polycarbonatplatte so aufgebracht, dass die einzelnen Probenbehältnisse gegeneinander fluidisch dicht verschliessend abgeschlossen sind und die Arrays mit den zugehörigen Einkoppelgittern (c) sich jeweils innerhalb der Probenbehältnisse befinden.

### 1B: Strahlengang

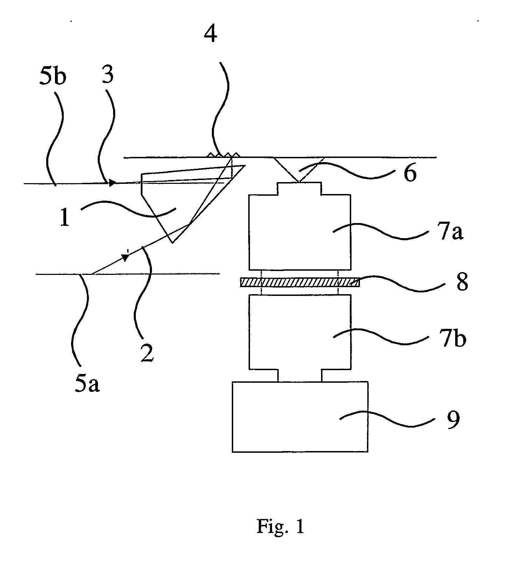

In Abbildung 1 ist schematisch, d.h. ohne Masstabs- oder Winkeltreuheit, der Strahlengang von Anregungslicht unterschiedlicher Wellenlänge durch eine optische Komponente zur Strahlumlenkung auf das Einkoppelgitter einer Sensorplattform, als Bestandteile eines erfindungsgemässen optischen Systems, dargestellt.

Mit (1) ist ein Multifacettenprisma, als Beispiel für eine optische Komponente mit mehreren diskreten Facetten zur Strahlumlenkung bezeichnet. (2) bezeichnet den Strahlengang kurzwelligeren, z. B. blauen, Anregungslichts durch die untere Facette auf das Einkoppelgitter (4) (gleichbedeutend mit einer Gitterstruktur (c) in der vorangehenden Beschreibung der Erfindung) der Sensorplattform, (3) den Strahlengang eines längerwelligen, beispielsweise roten Anregungslichts.

Für die Schicht- und Gitterparameter der in Beispiel 1 A beschriebenen Sensorplattform beträgt der Einkoppelwinkel für Anregungslicht von 492 nm etwa + 18.2° und von 670 nm etwa -17.4° (mit Luft als Medium über dem Koppelgitter). Der Divergenzwinkel zwischen Lichtstrahlen beider Anregunswellenlängen bei Erfüllung der Einkoppelbedingung beträgt also 35.6°. Das Multifacettenprisma, als Bestandteil des erfindungsgemässen optischen Systems, ist so gestaltet, dass der Winkel zwischen dem eingestrahlten kurzwelligen Anregungslicht, vor Eintritt in das Prisma, und der Parallelebene (5a) zur Ebene der Sensorplattenoberfläche 27.3° beträgt, während der Winkel zwischen dem eingestrahlten längerwelligen Anregungslicht, vor Eintritt in das Prisma, und der Parallelebene (5b) zur Ebene der Sensorplattenoberfläche 1.9° beträgt. Die ursprünglich, d.h. vor Eintritt in das Multifacettenprisma vorhandene Winkeldivergenz beträgt also nur 25.4°. Durch den Einsatz des Multifacettenprismas als Teil des erfindungsgemässen optischen Systems vergrössert sich also die Winkeldivergenz in diesem Beispiel um einen Faktor 1.40, wobei ausserdem die Anregungsstrahlen beider Wellenlängen am gleichen Ort auf dem Einkoppelgitter (4) der Sensorplattform eintreffen, so dass eine Einkopplung ohne Veränderung der Postionierung der Sensorplattform ermöglicht wird.

Das Multifacettenprisma ist auf einem in Abbildung 1 nicht dargestellten Goniometer derart montiert, dass bei einer Rotation von weniger als 5° der Versatz zwischen den Strahlzentren sich um weniger als 0.3 mm ändert.

In Abbildung 1 sind ausserdem schematisch der Öffnungswinkel (6) angedeutet, innerhalb dessen eintretendes Licht Lumineszenzlicht von der Sensorplattform auf den Detektor (9) mithilfe eines Tandemobjektivs, bestehend aus einem Eingangsobjektiv (7a) und einem Ausgangsobjektiv (7b), abgebildet werden kann. Zwischen den beiden Hälften des Tandemobjektivs befinden sich, in dem im Idealfall parallelen Teil des Emissionsstrahlenganges, ein oder mehrere Interferenzfilter (8) zur spektralen Selektion der Detektionswellenlänge. Mit dieser Anordnung wird ein Teil des isotrop abgestrahlten, von der Sensorplattform ausgehenden Lichts erfasst und auf den Detektor (9) geleitet.

### 1C: Analytisches System

Abbildung 2 zeigt Bestandteile einer beispielhaften Ausführungsform eines erfindungsgemässen analytischen Systems mit wesentlichen Komponenten eines erfindungsgemässem optischen Systems. Die Raumrichtungen x/y/z sind in der Abbildung angegeben.

Im obersten dargestellten Bereich von Abbildung 2 bezeichnet (10) eine erfindungsgemässe Einheit aus (Sensorplattform und Probenbehältnis) in der Ausbildung der äusseren Dimensionen einer Mikrotiterplatte, welche mit den Schrittmotoren (11a, 11b) in x- und y-Richtung bezüglich des Anregungslichts bewegt werden kann. Mit einer über dem System befindlichen Haube gegen die Umgebung abgeschlossen, kann dieser Bereich separat thermostatisiert werden.

Darunter schliesst sich ein weiterer Bereich an, mit einer Reihe von Spiegeln mit den zugehörigen Halterungen und Justiervorrichtungen, 12a, 12b, 12c, zur Umlenkung des Anregungslichts, bevorzugt von Laserlichtquellen, auf eine der Eingangsfacetten eines Multifacettenprisma 1. Die Spiegel 12 a-c werden bei Montage des Systems auf die erforderliche Einstrahlrichtung auf die vorgesehene Eingangsfacette des Multifacettenprismas eingestellt, um nach dem Strahldurchgang durch das Multifacettenprisma die Resonanzbedingung für die jeweilige Anregungswellenlänge zur Einkopplung des Anregungslichts in die wellenleitende Schicht einer Sensorplattform über eine Gitterstruktur (4) zu ermöglichen. Diese Spiegel können im Wartungsfall in x- und y-Richtung justiert werden. Im Strahlengang.zwischen den Spiegeln 12 a-c und dem Multifacettenprisma sind jeweils Blenden angebracht (In Abbildung 2 nicht dargestellt), mit denen der Anregungslichtstrahl auf die gewünschten geometrischen Abmessungen beschränkt werden kann. Ausserdem befindet sich in diesem Bereich ein Filterrad 13 zur Regulierung der Anregungslichtintensität mithilfe von diskreten Neutralfiltern unterschiedlicher Transmission. Im Falle breitbandiger Anregungslichtquellen oder bei Verwendung von Lasern mit mehreren Emissionslinien können in dem Filterrad 13 auch ein oder mehrere Plätze für Interferenz- oder Kantenfilter geeigneter Transmissionswellenlänge verwendet werden.

Auf der rechten Seite dieses Bereichs befindet sich ein weiteres Filterrad (14) zur Selektion der Wellenlängen, bei denen die Signalerfassung des von der Sensorplattform ausgehenden Lichts erfolgen soll, mithilfe von Interferenzfiltern (8). Die Signalerfassung kann sowohl bei den Emissionswellenlängen der angeregten einen oder mehreren Lumineszenzen als auch bei den Emissionswellenlängen der Anregungslichtquellen, gegebenenfalls in Kombination mit Neutralfiltern zur Abschwächung der Lichtintensität, erfolgen. In einer beispielhaften Ausführungsform des Systems erfolgt die Messung des bei den Anregungswellenlängen von der Sensorplattform abgestrahlten Lichts mithilfe von vorzugsweise schmalbandigen Filtern (d. h. < 10 nm Transmissionsbreite) bei folgenden Zentral-Transmissionswellenlängen:
A) 635 nm (Emissionswellenlänge des Lasers 635 nm)
B) 532 nm (Emissionswellenlänge des Lasers 532 nm)
C) 492 nm (Emissionswellenlänge des Lasers 492 nm).
   Im Falle schwacher Lumineszenzen, deren Intensität im Vergleich zur angeregten Lumineszenz vernachlässigbar ist, kann auch auf den Einsatz von spektral selektiven Filtern für die Detektion von Licht bei der Anregungswellenlänge verzichtet werden. Es ist auch möglich, eine mögliche Sättigung des Detektors 9 zu vermeiden, indem Signale bei der Anregungswellenlänge mit kürzeren Belichtungszeiten und / oder einer reduzierten Anregungslichtintensität unter Verwendung eines geeigneten Neutralfilters im Filterrad 13 aufgenommen werden. Auf den Einsatz von Filtern im Filterrad 14 für die Detektion bei der Anregungswellenlänge kann dann gegebenenfalls verzichtet werden.
   Zur Detektion des bei den unter A) bis C) genannten Wellenlängen angeregten Lumineszenzlichts werden die entsprechenden Filter D) - F) verwendet:
D) Filter zur Signalerfassung von Lumineszenz im Bereich von 650 - 700 nm, angeregt bei 635 nm
E) Filter zur Signalerfassung von Lumineszenz im Bereich von 540 - 590 nm, angeregt bei 532 nm
F) Filter zur Signalerfassung von Lumineszenz im Bereich von 500 - 550 nm, angeregt bei 492 nm

Oberhalb des Filterrades (14) befindet sich das Eingangsobjektiv (7a) eines Tandemobjektivs, unterhalb des Filterrades das Ausgangsobjektiv (7b) eines Tandemobjektivs.

Im darunterliegenden Bereich befinden sich Spiegel 15a, 15b und 15c zur Umlenkung des, vorzugsweise direkt auf diese Spiegel, eingestrahlten Anregungslichts. Diese Spiegel 15a-c sind vorzugsweise gegeneinander versetzt in y-Richtung montiert und so ausgerichtet, dass das Anregungslicht unter der geeigneten räumlichen Ausrichtung auf den entsprechenden Spiegeln 12 a-c auftrifft, um die Resonanzbedingung für die jeweilig Anregungswellenlänge zur Einkopplung des Anregungslichts in die wellenleitende Schicht einer Sensorplattform über eine Gitterstruktur (4) zu ermöglichen. Mit der beschriebenen beispielhaften Anordnung der Spiegel 12 a-c und 15 a-c (wobei eine Erweiterung auf eine grössere Anzahl von Lichtquellen unterschiedlicher Emisionswellenlänge und zusätzlicher optischer Komponenten zur Strahlumlenkung Bestandteil der vorliegenden Erfindung ist) ermöglicht insbesondere auch die gleichzeitige Einstrahlung von Anregungslicht unterschiedlicher Wellenlängen, sofern der Strahlversatz zwischen dem Auftreffen dieses Anregungslichts auf der Sensorplattfrom ausreichend gering ist. Die Spiegel 15 a-c können im Wartungsfall in z-Richtung justiert werden.

Selbstverständlich können alle vorangehend genannten Spiegel in ihrer Funktion durch andere strahlumlenkende optische Komponenten, wie beispielsweise Prismen, ersetzt werden.

Der gesamte rechte dargestellte Teil dieses Bereichs, der vorzugsweise separat thermostatisiert wird, wird in dieser beispielhaften Ausführung eingenommen von dem Detektor (9), bei dem es sich vorzugsweise um einen ortsauflösenden Detektor, besonders vorzugsweise um eine CCD-Kamera, handelt.

Die Anregungslichtquellen (in der Abbildung nicht dargestellt), von denen das Anregungslicht aus einem in dieser Ausführungsform verdeckten Teil dieses Bereichs eingestrahlt wird, sind so justiert, dass sie auf die Spiegel 15 a-c unter den geeigneten räumlichen Ausrichtungen fallen, um nach Strahldurchgang über die anderen, vorgenannten optischen Elemente im Anregungsstrahlengang für die jeweilige Wellenlänge die Resonanzbedingung für die jeweilige Anregungswellenlänge zur Einkopplung des Anregungslichts in die wellenleitende Schicht einer Sensorplattform über eine Gitterstruktur (4) zu ermöglichen.

In einer beispielhaften Ausführungsfrom des Systems werden Laser oder Laserdioden mit Hauptemissionswellenlängen bei 635, 532 und 492 nm verwendet.

Mit (16) ist im linken unteren Teil des unteren Bereichs eine Anordnung von Ventilatoren bezeichnet, welche der Luftzufuhr oder -abfuhr in das System dienen, insbesondere um die Thermostatisierung der verschiedenen Bereiche des Systems zu ermöglichen oder zu erleichtern.
Auf der rechten Seite von Abbildung 2 ist ein Stacker (17) dargestellt, in dem eine Vielzahl von erfindungsgemässen Sensorplattformen bzw. von Einheiten aus Sensorplattformen und entsprechenden Probenbehältnissen, insbesondere zur seriellen Durchführung einer Vielzahl von Messungen, gelagert werden können. Dieser Stacker ist vorzugsweise ausgestaltet zur Aufnahme von derartigen Komponenten mit den Aussenabmessungen einer StandardMikrotiterplatte. Die Eingabe der Komponenten erfolgt über den Eingabebereich (18), welcher zusätzlich eine Abdeckung umfasst und eine Vorrichtung zur Abstreifung eines optionalen Schutzbodens der erfindungsgemässen Sensorplattform umfasst (hier nicht dargestellt). Über eine ebenfalls nicht dargestellte Lichtschranke im Eingabebereich wird kontrolliert, ob sich dort eine Sensorplattform befindet und ob diese Sensorplattform den systemkonformen Abmessungen entspricht und in richtiger Ausrichtung in den Eingabebereich eingeführt wurde.

Der Bereich des Stackers kann gegebenenfalls ebenfalls separat thermostatisiert werden. Die Eingabe der Sensorplattformen in den Eingabebereich (18) kann manuell oder auch computergesteuert über einen geeigneten Roboterarm erfolgen.

## Patentansprüche

1. Optisches System zur Lumineszenzbestimmung mit einer Sensorplattform, wobei die Sensorplattform einen optischen Schichtwellenleiter mit einer ersten optisch transparenten Schicht auf einer zweiten optisch transparenten Schicht umfasst, wobei die zweite optisch transparente Schicht einen niedrigeren Brechungsindex als die erste optisch transparente Schicht aufweist und die Einkopplung von Anregungslicht (2,3) in die erste optisch transparente Schicht über in der Schicht modulierte diffraktive Gitter (4) erfolgt, **dadurch gekennzeichnet, dass** das optische System mindestens zwei Anregungslichtquellen sowie eine optische Komponente (1) mit mehreren diskreten Facetten zur Stahlumlenkung umfasst und der Divergenzwinkel zwischen auf unterschiedliche Facetten der optischen Komponente eintreffendem Anregungslicht (2,3) in dem von besagter optischer Komponente abgehenden Strahlengang um mindestens einen Faktor 1.2 gegenüber dem ursprünglichen Divergenzwinkel vergrössert oder verkleinert ist.

2. Optisches System nach Anspruch 1, **dadurch gekennzeichnet, dass** der Divergenzwinkel zwischen auf unterschiedliche Facetten der optischen Komponente eintreffendem Anregungslicht (2,3) in dem von besagter optischer Komponente abgehenden Strahlengang um mindestens einen Faktor 1.2, vorzugsweise um mehr als einen Faktor 1.5, gegenüber dem ursprünglichen Divergenzwinkel vergrössert ist.

3. Optisches System nach einem der Ansprüche 1-2, **dadurch gekennzeichnet, dass** es sich bei besagter optischer Komponente (1) mit mehreren diskreten Facetten zur Strahlumlenkung um einen Multifacettenspiegel mit planaren oder gekrümmten, vorzugsweise planaren Facetten handelt.

4. Optisches System nach einem der Ansprüche 1-2, **dadurch gekennzeichnet, dass** es sich bei besagter optischer Komponente (1) mit mehreren diskreten Facetten zur Strahlumlenkung um ein Multifacettenprisma mit planaren oder gekrümmten, vorzugsweise planaren Facetten handelt.

5. Optisches System nach einem der Ansprüche 1 - 4, **dadurch gekennzeichnet, dass** Licht von zwei oder mehr Anregungsquellen gleicher oder unterschiedlicher Wellenlänge auf unterschiedliche Facetten besagter optischer Komponente (1) eintreffen.

6. Optisches System nach einem der Ansprüche 1 - 4, **dadurch gekennzeichnet, dass** für jede unterschiedliche Anregungswellenlänge eine eigene Facette besagter optischer Komponente (1) vorgesehen ist, auf der besagtes Anregungslicht (2,3) eintrifft.

7. Optisches System nach einem der Ansprüche 1 - 6, **dadurch gekennzeichnet, dass** die Strahlumlenkung von Anregungslicht (2,3) von unterschiedlicher Wellenlänge in vorgegebene unterschiedliche Richtungen mit einem Versatz der Strahlzentren auf besagter Sensorplattform von weniger als 0.2 mm erfolgt.

8. Optisches System nach einem der Ansprüche 4-7, **dadurch gekennzeichnet, dass** das Multifacettenprisma zusätzlich Vorkehrungen umfasst, mit denen Reflexionen des Anregungslichts (2,3) von der Sensorplattform umgelenkt oder abgeschattet werden.

9. Optisches System nach einem der Ansprüche 4-8, **dadurch gekennzeichnet, dass** eine oder mehrere reflektierende Facetten des Multifacettenprismas teilweise oder ganz verspiegelt sind.

10. Optisches System nach einem der Ansprüche 1 - 9, **dadurch gekennzeichnet, dass** sich im optischen Weg des Anregungslichts (2,3) zwischen der mindestens einen Anregungslichtquelle und der optischen Komponente (1) mit mehreren diskreten Facetten zur Strahlumlenkung zusätzliche optische Elemente zur spektralen Selektion der Anregungswellenlänge, wie beispielsweise Interferenz- oder Kantenfilter, und gegebenenfalls zusätzliche optische Elemente zur Strahlabschwächung, wie beispielsweise optische Neutral- oder Graufilter, gegebenenfalls ausgebildet als Verlaufsfilter mit einem kontinuierlichen Gradienten der Transmission, und / oder weiteren Elementen zur Strahlführung, wie beispielsweise Glasfasern, gegebenenfalls mit damit verbundenen Mikrolinsen oder diffraktiven optischen Elementen, befinden.

11. Optisches System nach einem der Ansprüche 1-10, **dadurch gekennzeichnet, dass** als Anregungslichtquellen zwei oder mehr Laser unterschiedlicher Emissionswellenlänge verwendet werden.

12. Optisches System nach einem der Ansprüche 1-11, **dadurch gekennzeichnet, dass** zur Erzeugung eines gewünschten Strahlprofils auf der Sensorplattform im Anregungsstrahlengang zwischen den Lichtquellen und der Sensorplattform zusätzliche optische Elemente verwendet werden, welche beispielsweise diffraktive optische Elemente und / oder Linsen zur Strahlaufweitung und / oder Erzeugung eines Parallelstrahls und / oder Blenden oder Masken zur teilweisen Strahlabschattung umfassen.

13. Optisches System nach einem der Ansprüche 1-12, **dadurch gekennzeichnet, dass** die Sensorplattform eine Vielzahl von diskreten Messbereichen umfasst, in denen biologische oder biochemische oder synthetische Erkennungselemente zum Nachweis eines oder mehrerer Analyten immobilisiert sind.

14. Optisches System nach einem der Ansprüche 1 - 13, **dadurch gekennzeichnet, dass** auf der Sensorplattform in einer 2-dimensionalen Anordnung bis zu 100 000 Messbereiche angeordnet sind.

15. Optisches System nach einem der Ansprüche 1-14, **dadurch gekennzeichnet, dass** ein einzelner Messbereich eine Fläche von 0.001 - 6 mm² einnimmt.

16. Optisches System nach einem der Ansprüche 1 -15, durch **gekennzeichnet**, dass zwischen den biologischen oder biochemischen oder synthetischen Erkennungselementen und der Sensorplattform eine Haftvermittlungsschicht aufgebracht ist.

17. Optisches System nach Anspruch 16, **dadurch gekennzeichnet, dass** die Haftvermittlungsschicht eine Stärke von weniger als 200 nm, vorzugsweise von weniger als 20 nm, hat, und dass die Haftvermittlungsschicht vorzugsweise eine chemische Verbindung aus den Gruppen umfasst, die Silane, Epoxide, funktionalisierte, geladene oder polare Polymere und "selbstorganisierte passive oder funktionalisierte Mono- oder Doppelschichten" umfassen.

18. Optisches System nach einem der Ansprüche 1-17, **dadurch gekennzeichnet, dass** auf der Sensorplattform räumlich getrennte Messbereiche durch räumlich selektive Aufbringung von biologischen oder biochemischen oder synthetischen Erkennungselementen auf besagter Sensorplattform erzeugt werden.

19. Optisches System nach Anspruch 18, **dadurch gekennzeichnet, dass** als besagte biologische oder biochemische oder synthetische Erkennungselemente Komponenten aus der Gruppe aufgebracht werden, die von Nukleinsäuren (beispielsweise DNA, RNA, Oligonukleotiden) und Nukleinsäureanalogen (z. B. PNA), mono- oder polyklonalen Antikörpern, Peptiden, Enzymen, Aptameren, synthetischen Peptidstrukturen, löslichen, membrangebundenen und aus einer Membran isolierten Proteinen, wie beispielsweise Rezeptoren, deren Liganden, Antigenen für Antikörper, "Histidin-Tag-Komponenten" und deren Komplexbildungspartnern, durch chemische Synthese erzeugten Kavitäten zur Aufnahme molekularer Imprints, etc. gebildet wird.

20. Optisches System nach Anspruch 18, **dadurch gekennzeichnet, dass** als biologische oder biochemische oder synthetische Erkennungselemente Zellen, Zellbestandteile, Zellmembranen oder deren Fragmente aufgebracht werden.

21. Optisches System nach einem der Ansprüche 18-20, **dadurch gekennzeichnet, dass** Bereiche zwischen den räumlich getrennten Messbereichen zur Minimierung unspezifischer Bindung von Analyten oder deren Nachweissubstanzen "passiviert werden", d.h. dass zwischen den räumlich getrennten Messbereichen gegenüber dem Analyten "chemisch neutrale" Verbindungen aufgebracht sind, vorzugsweise beispielsweise bestehend aus den Gruppen, die von Albuminen, insbesondere Rinderserumalbumin oder Humanserumalbumin, Casein, unspezifischen, polyklonalen oder monoklonalen, artfremden oder empirisch für den oder die nachzweisenden Analyten unspezifischen Antikörpern (insbesondere für Immunoassays), Detergentien - wie beispielsweise Tween 20 -, nicht mit zu analysierenden Polynukleotiden hybridisierender, fragmentierter natürlicher oder synthetischer DNA, wie beispielsweise ein Extrakt von Herings- oder Lachssperma (insbesondere für Polynukleotid-Hybridisierungsassays), oder auch ungeladenen, aber hydrophilen Polymeren, wie beispielsweise Polyethylenglycole oder Dextrane, gebildet werden.

22. Optisches System nach einem der Ansprüche 1-21, **dadurch gekennzeichnet, dass** das Lumineszenzlicht von den Messbereichen auf der Sensorplattform auf mindestens einen optoelektronischen Detektor geleitet wird.

23. Optisches System nach einem der Ansprüche 1- 22, **dadurch gekennzeichnet, dass** das Lumineszenzlicht von den Messbereichen auf einen ortsauflösenden Detektor abgebildet wird, welcher vorzugsweise ausgewählt ist aus der Gruppe, die von CCD-Kameras, CCD-Chips, Photodioden-Arrays, Avalanche-Dioden-Arrays, Multichannel-Plates und Vielkanal-Photomultipliern gebildet wird.

24. Optisches System nach einem der Ansprüche 1- 23, **dadurch gekennzeichnet, dass** das Lumineszenzlicht von den Messbereichen über ein System aus ein oder mehr Linsen und / oder Spiegeln auf den mindestens einen optoelektronischen Detektor abgebildet wird.

25. Optisches System nach einem der Ansprüche 1 - 24, **dadurch gekennzeichnet, dass** sich im Emissionsstrahlengang zwischen der Sensorplattform und dem mindestens einen optoelektronischen Detektor zur Aufzeichnung der von den Messbereichen ausgestrahlten Lumineszenz ein oder mehr optische Elemente, wie beispielsweise diffraktive Elemente, Interferenzfilter oder Kantenfilter, zur Seletion der Emissionswellenlänge und Diskrimination von Licht anderer Wellenlänge befinden.

26. Optisches System nach Anspruch 25, **dadurch gekennzeichnet, dass** der Emissionsstrahlengang am Ort des Einsatzes besagter optischer Elemente zur spektralen Selektion der Emissionswellenlänge eine Divergenz oder Konvergenz von weniger als 15° aufweist.

27. Optisches System nach einem der Ansprüche 25 - 26, **dadurch gekennzeichnet, dass** sich die optischen Elemente, wie beispielsweise Interferenzfilter oder Kantenfilter, zur Selektion der Emissionswellenlänge und Diskrimination von Licht anderer Wellenlänge zwischen den zwei Hälften eines Tandem-Objektivs befinden.

28. Optisches System nach einem der Ansprüche 1 - 27, **dadurch gekennzeichnet, dass** die Sensorplattform einen optisch transparenten Träger umfasst, vorzugsweise aus Glas oder einem thermoplastischen Kunststoff, auf dem die biologischen oder biochemischen oder synthetischen Erkennungselemente in den Messbereichen immobilisiert sind.

29. Optisches System nach einem der Ansprüche 1 - 28, **dadurch gekennzeichnet, dass** die Sensorplattform einen planaren optischen Wellenleiter umfasst.

30. Optisches System nach Anspruch 29, **dadurch gekennzeichnet, dass** Einkopplung von Anregungslicht (2,3) in die erste optisch transparente Schicht über in der Schicht modulierte Reliefgitter erfolgt.

31. Optisches System nach Anspruch 30, **dadurch gekennzeichnet, dass** Gitterstrukturen in der ersten wellenleitenden Schicht der Sensorplattform in einem ein- oder zwei dimensionalen Array angeordnet sind, woran sich jeweils in Ausbreitungsrichtung des einzukoppelnden Anregungslichts (2,3) unstrukturierte Bereiche der ersten wellenleitenden Schicht anschliessen, auf denen Arrays von 2 oder mehr Messbereichen angeordnet sind, welche gegebenenfalls zusätzlich fluidisch dichtend gegeneinander in diskreten Probenbehältnissen abgeschlossen werden können.

32. Optisches System nach einem der Ansprüche 30-31, **dadurch gekennzeichnet, dass** auf der Sensorplattform zusätzlich zu Gitterstrukturen (4) zur Einkopplung von Anregungslicht (2,3) zweite Gitterstrukturen zur Auskopplung von Anregungslicht (2,3) und gegebenenfalls in die erste die wellenleitende Schicht rückgekoppelten Lumineszenzlichts vorgesehen sind, um das in der ersten wellenleitenden Schicht geführte Licht, nach Durchlaufen der Messbereiche z.B. in Ausbreitungsrichtung des geführten Anregungslichts (2,3) im Anschluss an eine Einkoppelgitterstruktur wieder auszukoppeln.

33. Optisches System nach einem der Ansprüche 30 - 32, **dadurch gekennzeichnet, dass** Gitterstrukturen (4) zur Einkopplung von Anregungslicht und gegebenenfalls zweite Gitterstrukturen zur Auskopplung von Anregungslicht diskret für einzelne Segmente z.B. Anordnungen in ein- oder zweidimensionalen Arrays von Messbereichen angeordnet sind.

34. Optisches System nach einem der Ansprüche 30 - 32, **dadurch gekennzeichnet, dass** Gitterstrukturen (4) zur Einkopplung von Anregungslicht und gegebenenfalls zweite Gitterstrukturen zur Auskopplung von Anregungslicht senkrecht zur Ausbreitwigsrichtung des einzukoppelnden Anregungslichts in durchgehenden Streifen bzw. Spalten über die ganze Sensorplattform ausgebildet sind.

35. Optisches System nach einem der Ansprüche 32 - 34, **dadurch gekennzeichnet, dass** Gitterstrukturen zur Auskopplung von Anregungslicht in sequentieller Durchführung von Messungen auch als Einkoppelgitter (4) zur Einkopplung von Anregungslicht verwendet werden.

36. Optisches System nach einem der Ansprüche 32 - 35, **dadurch gekennzeichnet, dass** Gitterstrukturen zur Einkopplung (4) und Gitterstrukturen zur Auskopplung von Licht aus der ersten wellenleitenden Schicht der Sensorplattform gleiche Periode haben und durchgehend unter allen Messbereichen der Sensorplattform moduliert sind.

37. Optisches System nach einem der Ansprüch 29 - 36, **dadurch gekennzeichnet, dass** das Produkt aus der Dicke der ersten wellenleitenden Schicht der Sensorplattform und ihrem Brechungsindex ein Zehntel bis ein Ganzes, bevorzugt ein Drittel bis zwei Drittel, der Anregungswellenlänge eines in dieser ersten wellenleitenden Schicht einzukoppelnden Anregungslichts beträgt.

38. Optisches System nach einem der Ansprüche 29-37, **dadurch gekennzeichnet, dass** zwischen der ersten optisch transparenten Schicht der Sensorplattform und den immobilisierten biologischen oder biochemischen oder synthetischen Erkennungselementen eine dünne Metallschicht, vorzugsweise aus Gold oder Silber, gegebenenfalls auf einer zusätzlichen dielektrischen Schicht mit niedrigerem Brechungsindex als der ersten wellenleitenden Schicht, beispielsweise aus Silica oder Magnesiumfluorid, aufgebracht ist, wobei die Dicke der Metallschicht und der eventuellen weiteren Zwischenschicht so ausgewählt ist, dass ein Oberflächenplasmon bei der Anregungswellenlänge und / oder der Lumineszenzwellenlänge angeregt werden kann.

39. Optisches System nach einem der Ansprüche 1 - 38, **dadurch gekennzeichnet, dass** auf der Sensorplattform optisch oder mechanisch erkennbare Markierungen zur Erleichterung der Justierung in einem optischen System und / oder zur Verbindung mit Probenbehältnissen als Teil eines analytischen Systems und / oder als Hilfsmittel für eine nachfolgende Bildauswertung aufgebracht sind.

40. Optisches System nach einem der Ansprüche 1 - 39, **dadurch gekennzeichnet, dass** die Sensorplattform eine Kennzeichnung, beispielsweise in Form eines Barcodes, trägt.

41. Optisches System nach einem der Ansprüche 1 - 40, **dadurch gekennzeichnet, dass** das Anregungslicht (2,3) der zwei oder mehr Lichtquellen jeweils im Wesentlichen monochromatisch ist.

42. Optisches System nach einem der Ansprüche 1-41, **dadurch gekennzeichnet, dass** das Anregungslicht (2, 3) verschiedener Lichtquellen gleichzeitig aus verschiedenen Richtungen auf die Sensorplattform eingestrahlt wird, wobei der Versatz zwischen den Strahlzentren auf der Sensorplattform weniger als 0.2 mm beträgt.

43. Optisches System nach einem der Ansprüche 1 - 42, **dadurch gekennzeichnet, dass** zwischen der Sensorplattform und dem einen oder mehreren Detektoren optische Komponenten (1) aus der Gruppe verwendet werden, die von Linsen oder Linsensystemen zur Formgestaltung der übertragenen Lichtbündel, planaren oder gekrümmten Spiegeln zur Umlenkung und gegebenenfalls zusätzlich zur Formgestaltung von Lichtbündeln, Prismen zur Umlenkung und gegebenenfalls zur spektralen Aufteilung von Lichtbündeln, dichroischen Spiegeln zur spektral selektiven Umlenkung von Teilen von Lichtbündeln, Neutralfiltern zur Regelung der übertragenen Lichtintensität, optischen Filtern oder Monochromatoren zur spektral selektiven Übertragung von Teilen von Lichtbündeln oder polarisationsselektiven Elementen zur Auswahl diskreter Polarisationsrichtungen des Anregungs- oder Lumineszenzlichts gebildet werden.

44. Optisches System nach einem der Ansprüche 1 - 43, **dadurch** gekenzeichnet, dass die Einstrahlung des Anregungslichts (2,3) in Pulsen mit einer Dauer zwischen 1 fsec und 10 Minuten erfolgt.

45. Optisches System nach einem der Ansprüche 1 - 44, **dadurch gekennzeichnet, dass** das Emissionslicht aus den Messbereichen zeitlich aufgelöst gemessen wird.

46. Optisches System nach einem der Ansprüche 1- 45, **dadurch gekennzeichnet, dass** zur Referenzierung Lichtsignale aus der Gruppe gemessen werden, die von Anregungslicht am Ort der Lichtquellen oder nach ihrer Aufweitung oder nach ihrer Unterteilung in Teilstrahlen, Streulicht bei der Anregungswellenlänge aus dem Bereich der einen oder mehreren räumlich getrennten Messbereiche, und über gegebenenfalls vorhandene Gitterstrukturen (4) zur Einkopplung des Anregungslichts oder Gitterstrukturen zur Auskopplung des Anregungslichts neben den Messbereichen ausgekoppeltem Licht der Anregungswellenlänge gebildet werden.

47. Optisches System nach Anspruch 46, **dadurch gekennzeichnet, dass** die Messbereiche zur Bestimmung des Emissionslichts und des Referenzsignals ganz oder teilweise überlappen, wobei sie vorzugsweise identisch sind.

48. Optisches System nach einem der Ansprüche 32 - 47, **dadurch gekennzeichnet, dass** die Optimierung der Justierung für optimale Einkopplung von Anregungslicht (2,3) über ein Einkoppelgitter (4) zur Einkopplung des Anregungslichts zu in Ausbreitungsrichtung des eingekoppelten Lichts befindlichen Messbereichen durch Maximierung des von einem Detektor erfassten und über ein Auskoppelgitter ausgekoppelten Anregungslichts erfolgt, wobei diese Optimierung bevorzugt rechnergesteuert erfolgt.

49. Optisches System nach Anspruch 48, **dadurch gekennzeichnet, dass** zur Optimierung der Justierung des Koppelwinkels eine Rotation der optischen Komponente (1) mit mehreren diskreten Facetten zur Strahlumlenkung um eine innerhalb oder ausserhalb dieser optischen Komponente (1) gelegene Achse erfolgt.

50. Optisches System nach Anspruch 49, **dadurch gekennzeichnet, dass** die optische Komponente (1) mit mehreren diskreten Facetten zur Strahlumlenkung an ein Rotationselement mit Drehachse innerhalb oder ausserhalb dieser optischen Komponente (1) derart montiert ist, dass bei einer Rotation der Komponente um besagte Drehachse von weniger als 5° der Strahlversatz auf der Sensorplattform weniger als 0.3 mm beträgt.

51. Optisches System nach einem der Ansprüche 48 - 50, **dadurch gekennzeichnet, dass** zur Optimierung der Koppelposition auf der Sensorplattform eine Translation der Sensorplattform parallel oder senkrecht zu den Gitterlinien erfolgt.

52. Optisches System nach einem der Ansprüche 47-51, **dadurch gekennzeichnet, dass** die Optimierung der Justierung mittels Maximierung von einem oder mehreren Referenzsignalen von einem oder mehreren Messbereichen auf der Sensorplattform, erfolgt, wobei diese Optimierung vorzugsweise rechnergesteuert erfolgt.

53. Optisches System nach Anspruch 52, **dadurch gekennzeichnet, dass** es sich bei besagtem Referenzsignal um Streulicht bei der Anregungswellenlänge handelt.

54. Optisches System nach Anspruch 52, **dadurch gekennzeichnet, dass** es sich bei besagtem Referenzsignal um Lumineszenzlicht aus für Zwecke der Referenzierung und / oder Justierung vorgesehenen Messbereichen handelt.

55. Optisches System nach einem der Ansprüche 13-54, **dadurch gekennzeichnet, dass** die Einstrahlung des Anregungslichts (2,3) auf und Detektion des Emissionslichts von einem oder mehreren Messbereichen sequentiell für einzelne oder mehrere Messbereiche erfolgt.

56. Optisches System nach einem der Anspruch 55, **dadurch gekennzeichnet, dass** die Sensorplattform zwischen Schritten der sequentiellen Anregung und Detektion bewegt wird.

57. Analytisches System zum Lumineszenznachweis eines oder mehrerer Analyten in mindestens einer Probe auf einem oder mehreren Messbereichen auf einer Sensorplattform mit
- einem optischen System nach einem der Ansprüche 1 - 56,
- Zuführungsmitteln, um die eine oder mehrere Proben mit den Messbereichen auf der Sensorplattform in Kontakt zu bringen.

58. Analytisches System nach Anspruch 57, **dadurch gekennzeichnet, dass** dieses zusätzlich ein oder mehrere Probenbehältnisse umfasst, welche mindestens im Bereich der einen oder mehreren Messbereiche oder der zu Segmenten zusammengefassten Messbereiche zur Sensorplattform hin geöffnet sind.

59. Analytisches System nach Anspruch 58, **dadurch gekennzeichnet, dass** die Probenbehältnisse jeweils ein Volumen von 0.1 nl - 100 µl haben.

60. Analytisches System nach einem der Ansprüche 58 - 59, **dadurch gekennzeichnet, dass** die Probenbehältnisse auf der von der ersten optisch transparenten Schicht abgewandten Seite, mit Ausnahme von Ein- und / oder Auslassöffnungen für die Zufuhr oder den Auslass der Proben und gegebenenfalls zusätzlicher Reagentien, geschlossen sind und die Zufuhr oder der Auslass von Proben und gegebenenfalls zusätzlicher Reagentien in einem geschlossenen Durchflusssystem erfolgen, wobei im Falle der Flüssigkeitszufuhr zu mehreren Messbereichen oder Segmenten mit gemeinsamen Einlass- und Auslassöffnungen diese bevorzugt spalten- oder zeilenweise addressiert werden.

61. Analytisches System nach einem der Ansprüche 58-60, **dadurch gekennzeichnet, dass** die Zufuhr der Proben und gegebenenfalls zusätzlichen Reagentien in parallelen oder gekreuzten Mikrokanälen, unter Einwirkung von Druckunterschieden oder elektrischen oder elektromagnetischen Potentialen erfolgt.

62. Analytisches System nach einem der Ansprüche 58-61, **dadurch gekennzeichnet, dass** die Probenbehältnisse auf der von der ersten optisch transparenten wellenleitenden Schicht abgewandten Seite Öffnungen zur lokal addressierten Zugabe oder Entfernung der Proben oder anderer Reagentien besitzen.

63. Analytisches System nach einem der Ansprüche 58 - 62, **dadurch gekennzeichnet, dass** die Probenbehältnisse in einem Array angeordnet sind, umfassend die Sensorplattform als Grundplatte und einen damit derart zusammengebrachten Körper, dass zwischen der Grundplatte und besagtem Körper ein Array von räumlichen Aussparungen zur Erzeugung eines Arrays von gegeneinander fluidisch abgedichteten Flusszellen mit jeweils mindestens einem Zulauf und mindestens einem Ablauf erzeugt wird und dass mindestens ein Ablauf jeder Flusszelle in ein mit dieser Flusszelle fluidisch verbundenes Reservoir führt, welches aus der Flusszelle austretende Flüssigkeit aufnimmt.

64. Analytisches System nach Anspruch 63, **dadurch gekennzeichnet, dass** das Reservoir zur Aufnahme aus der Flusszelle austretender Flüssigkeit als eine Vertiefung in der Aussenwand des mit der Grundplatte zusammengebrachten Körpers ausgebildet ist.

65. Analytisches System nach einem der Ansprüche 57 - 64, **dadurch gekennzeichnet, dass** es 2 - 2000, vorzugsweise 2 - 400, besonders bevorzugt 2-100 Probenbehältnisse umfasst.

66. Analytisches System nach einem der Ansprüche 57 - 65, **dadurch gekennzeichnet, dass** das Raster, z.B. Aufeinanderfolge in Zeilen und / oder Spalten, der Zuläufe der Probenbehältnisse dem Raster der Wells einer Standardmikrotiterplatte entspricht.

67. Analytisches System nach einem der Ansprüche 57 - 65, **dadurch gekennzeichnet, dass** die Anordnung von Probenbehältnissen mit der Sensorplattform als Grundplatte und dem damit zusammengebrachten Körper die Grundabmessungen bzw. Footprint einer Standardmikrotiterplatte hat.

68. Analytisches System nach einem der Ansprüche 57-65, mit beispielsweise 2 bis 8 Probenbehältnissen in einer Spalte oder beispielsweise 2 bis 12 Probenbehältnissen in einer Zeile, **dadurch gekennzeichnet, dass** diese ihrereseits mit einem Träger, bzw. "Metaträger", mit den Abmessungen von Standardmikrotiterplatten derart zusammengefügt werden, dass das Raster bzw. Aufeinanderfolge in Zeilen oder Spalten der Zuläufe der Flusszellen dem Raster der Wells einer Standardmikrotiterplatte entspricht.

69. Analytisches System nach einem der Ansprüche 57 - 68, **dadurch gekennzeichnet, dass** unterhalb der Sensorplattform als Grundplatte einer Anordnung von Probenbehältnissen ein entfernbarer Schutzboden angeordnet ist und gegebenenfalls die Oberseite der Anordnung von Probenbehältnissen durch einen zusätzlichen Abschluss, beispielsweise eine Folie, Membran oder eine Deckplatte, abgeschlossen wird.

70. Analytisches System nach Anspruch 69, **dadurch gekennzeichnet, dass** der Schutzboden vor einer Messung automatisch oder halbautomatisch entfernt wird.

71. Analytisches System nach einem der Ansprüche 57-70, umfassend ein optisches System nach einem der Ansprüche 29 - 56, **dadurch gekennzeichnet, dass** sich innerhalb jedes Probenbehältnisses mindestens eine in der ersten wellenleitenden Schicht einer Sensorplattform als Grundplatte modulierte Gitterstruktur (4) zur Einkopplung von Anregungslicht zu den Messbereichen befindet.

72. Analytisches System nach einem der Ansprüche 57 - 70, umfassend ein optisches System nach einem der Ansprüche 32 - 56, **dadurch gekennzeichnet, dass** sich Gitterstrukturen (4) zur Einkopplung von Anregungslicht innerhalb des Bereichs der Probenbehältnisse und zusätzliche Gitterstrukturen zur Auskopplung des Anregungslichts sich jeweils ausserhalb der Probenbehältnisse befinden, in denen jeweils die Einkopplung des Anregungslichts (2,3) erfolgt.

73. Analytisches System nach einem der Ansprüche 57 - 70, mit einem optischen System nach einem der Ansprüche 32 - 56, **dadurch gekennzeichnet, dass** sich Gitterstrukturen (4) zur Einkopplung des Anregungslichts und gebenenfalls zusätzlich vorhandene Gitterstrukturen zur Auskopplung des Anregungslichts über den Bereich mehrerer oder alle Probenbehältnisse erstrecken.

74. Analytisches System nach einem der Ansprüche 57 - 73, **dadurch gekennzeichnet, dass** sich in einem Probenbehältnis 5 - 5000, bevorzugt 10 - 400 Messbereiche befinden.

75. Analytisches System nach einem der Ansprüche 57 - 74, **dadurch gekennzeichnet, dass** es zusätzlich mechanische Vorkehrungen und einen Transportmechanismus umfasst, womit ein automatisierter Transport einer Anordnung von Probenbehältnissen, bestehend aus einer Sensorplattform als Grundplatte und einem damit zusammengebrachten Körper, vom Ort der Eingabe zur Position der Lumineszenzanregung und -detektion und gegebenenfalls zurück zur Ausgangsposition erfolgt.

76. Analytisches System nach einem der Ansprüche 57 - 75, **dadurch gekennzeichnet, dass** es zusätzlich eine Aufnahmevorrichtung bzw."Stacker" zur Aufnahme einer Vielzahl von Anordnungen von Probenbehältnissen umfasst.

77. Analytisches System nach Anspruch 76, **dadurch gekennzeichnet, dass** die Beladung des "Stackers" vom Ort der Eingabe der Anordnung von Probenbehältnissen und von dort deren Transport zur Position der Lumineszenzanregung und -detektion und gegebenenfalls zurück zur Ausgangsposition automatisch erfolgen.

78. Analytisches System nach einem der Ansprüche 57 - 77, **dadurch gekennzeichnet, dass** es eine oder mehrere thermostatisierbare Zonen umfasst.

79. Analytisches System nach Anspruch 78, **dadurch gekennzeichnet, dass** die Anordnung von Probenbehältnissen und / oder der Anregungslichtquellen und / oder des einen oder der mehreren optoelektronischen Detektoren und / oder des "Stackers" separat thermostatisiert werden können.

80. Analytisches System nach einem der Ansprüche 76 - 79, **dadurch gekennzeichnet, dass** die Anordnung von Probenbehältnissen und / oder der Anregungslichtquellen und / oder des einen oder der mehreren optoelektronischen Detektoren und / oder des "Stackers" bei einem höheren Luftdruck als dem Umgebungsdruck betrieben wird.

81. Analytisches System nach einem der Ansprüche 57 - 80, **dadurch gekennzeichnet, dass** es zusätzliche eine oder mehrere elektronische Kontrollkomponenten zur Überwachung des Zustandes einer oder mehrerer optischer oder elektrischer oder mechanischer Komponenten umfasst, welche gegebenenfalls ein optisches oder akustisches oder elektronisches Alarmsignal erzeugen können.

82. Analytisches System nach einem der Ansprüche 57-81, **dadurch gekennzeichnet, dass** es Vorkehrungen umfasst, mit denen eine Eingabe ungeeigneter Sensorplattformen, beispielsweise mit falschen mechanischen Abmessungen, verhindert wird.

83. Analytisches System nach einem der Ansprüche 57 - 82, **dadurch gekennzeichnet, dass** es zusätzlich einen oder mehrere elektronische Prozessoren, verbunden mit Speichermedien und elektronischen Zuleitungsmedien, eine Eingabetastatur, einen Bildschirm und einen Programmcode zur automatisierten Steuerung umfasst.

84. Analytisches System nach einem der Ansprüche 57 - 83, **dadurch gekennzeichnet, dass** der Betrieb besagten analytischen Systems und / oder die Messvorgänge automatisch mittels vorgegebener Initialisierungsdateien erfolgt.

85. Analytisches System nach einem der Ansprüche 57 - 84, **dadurch gekennzeichnet, dass** es nach einer angezeigten Fehlfunktion automatisch in einen definierten Anfangszustand versetzt wird und gegebenenfalls erzeugte Messdaten in einer Datei gesichert werden.

86. Analytisches System nach einem der Ansprüche 57 -85, **dadurch gekennzeichnet, dass** in automatisierter Form für jede Messung eine Datei erzeugt wird, in der die Kennzeichnung der verwendeten Sensorplattform und die wesentlichen Parameter besagter Messung sowie die Messdaten abgespeichert werden.

87. Analytisches System nach einem der Ansprüche 57 - 86, **dadurch gekennzeichnet, dass** lokale Variationen der Anregungslichtintensität auf der Sensorplattform und / oder der Detektionsempfindlichkeit des optischen Systems für Lichtsignale von unterschiedlichen Orten auf der Sensorplattform nach Aufnahme der Originaldaten korrigiert werden mittels Vorkehrungen, welche beispielsweise die Aufnahme von Korrekturbildern bei der Anregungswellenlänge und / oder einer oder mehrerer Lumineszenzwellenlängen, die Berechnung von theoretischen Verteilungen der verfügbaren Anregungslichtintensität, theoretische Berechnungen der ortsaufgelösten Effizienz des optischen Abbildungs- und Detektionssystems etc. umfassen.

88. Verfahren zum Lumineszenznachweis eines oder mehrerer Analyten, unter Verwendung eines analytischen Systems nach einem der Ansprüche 57 - 87, welches ein optisches System nach einem der Ansprüche 1 - 56 umfasst, **dadurch gekennzeichnet, dass** eine oder mehrere flüssige Proben, welche auf den einen oder die mehreren Analyten untersucht werden sollen, mit einem oder mehreren Messbereichen auf der Sensorplattform in Kontakt gebracht werden, Anregungslicht (2,3) in die Messbereiche geleitet wird, hierbei lumineszenzfähige Stoffe in den Proben oder auf den Messbereichen zur Lumineszenz angeregt und die abgestrahlte Lumineszenz gemessen wird.

89. Verfahren nach Anspruch 88, **dadurch gekennzeichnet, dass** zur Erzeugung der Lumineszenz mindestens ein Lumineszenzfarbstoff oder lumineszentes Nanopartikel als Lumineszenzlabel verwendet wird, das bei einer Wellenlänge zwischen 300 nm und 1100 nm angeregt werden kann und emittiert.

90. Verfahren nach einem der Ansprüche 88 - 89, **dadurch gekennzeichnet, dass** es Vorkehrungen umfasst, mit denen der dynamische Bereich der Signalaufnahme um mindestens einen Faktor 3 erweitert wird.

91. Verfahren nach Anspruch 90, **dadurch gekennzeichnet, dass** die Vorkehrungen zur Erweiterung des dynamischen Bereichs die Verwendung von unterschiedlich langen Belichtungszeiten, d.h. der Dauer der Einstrahlung des Anregungslichts (2,3) und der Integrationszeit des Detektors, umfassen, welche sich mindestens um einen Faktor 3 unterscheiden.

92. Verfahren nach Anspruch 90, **dadurch gekennzeichnet, dass** die Vorkehrungen zur Erweiterung des dynamischen Bereichs eine Variation der Intensität des auf der Sensorplattform verfügbaren Anregungslichts (2,3) um mindestens einen Faktor 3 umfassen, beispielsweise durch Einsatz von diskreten Neutralfiltern im Anregungsstrahlengang, gegebenenfalls ausgebildet als Verlaufsfilter mit einem kontinuierlichen Gradienten der Transmission oder Variation der Intensität der Lichtquellen oder Änderung der Justierung der Sensorplattform bezüglich des Anregungsstrahlenganges.

93. Verfahren nach einem der Ansprüche 88 - 92, **dadurch gekennzeichnet, dass** das mindestens eine Lumineszenzlabel an den Analyten oder in einem kompetitiven Assay an einen Analogen des Analyten oder in einem mehrstufigen Assay an einen der Bindungspartner der immobilisierten biologischen oder biochemischen oder synthetischen Erkennungselementen oder an die biologischen oder biochemischen oder synthetischen Erkennungselementen gebunden ist.

94. Verfahren nach einem der Ansprüche 88 - 93, **dadurch gekennzeichnet, dass** ein zweites oder noch weitere Lumineszenzlabel mit gleicher oder unterschiedlicher Anregungswellenlänge wie das erste Lumineszenzlabel und gleicher oder unterschiedlicher Emissionswellenlänge verwendet werden

95. Verfahren nach Anspruch 94, **dadurch gekennzeichnet, dass** zum Nachweis des Analyten Ladungs- oder optischer Energietransfer von einem als Donor dienenden ersten Lumineszenzfarbstoff zu einem als Akzeptor dienenden zweiten Lumineszenzfarbstoff verwendet wird.

96. Verfahren nach einem der Ansprüche 88 - 95, **dadurch gekennzeichnet, dass** die einen oder mehreren Lumineszenzen und / oder Bestimmungen von Lichtsignalen bei der Anregungswellenlänge polarisationsselektiv vorgenommen werden.

97. Verfahren nach einem der Ansprüche 88 - 96, **dadurch gekennzeichnet, dass** die einen oder mehreren Lumineszenzen bei einer anderen Polarisation als der des Anregungslichts (2,3) gemessen werden.

98. Verfahren nach einem der Ansprüche 88 - 97 zur gleichzeitigen oder sequentiellen, quantitativen oder qualitativen Bestimmung eines oder mehrerer Analyten aus der Gruppe von Antikörpern oder Antigenen, Rezeptoren oder Liganden, Chelatoren oder "Histidin-tag-Komponenten", Oligonukleotiden, DNA- oder RNA-Strängen, DNA- oder RNA-Analoga, Enzymen, Enzymcofaktoren oder Inhibitoren, Lektinen und Kohlehydraten.

99. Verfahren nach einem der Ansprüche 88 - 98, **dadurch gekennzeichnet, dass** die zu untersuchenden Proben natürlich vorkommende Körperflüssigkeiten wie Blut, Serum, Plasma, Lymphe oder Urin oder Eigelb oder optisch trübe Flüssigkeiten oder Gewebeflüssigkeiten oder Oberflächenwasser oder Boden- oder Pflanzenextrakte oder Bio- oder Syntheseprozessbrühen oder aus biologischen Gewebeteilen oder aus Zellkulturen oder -extrakten entnommen sind.

100. Verwendung eines optischen Systems nach einem der Ansprüche 1 - 56 und / oder eines analytischen Systems nach einem der Ansprüche 57 - 87 und / oder eines Verfahrens nach mindestens einem der Ansprüche 88 - 99 zu quantitativen oder qualitativen Analysen zur Bestimmung chemischer, biochemischer oder biologischer Analyten in Screeningverfahren in der Pharmaforschung, der Kombinatorischen Chemie, der Klinischen und Präklinischen Entwicklung, zu Echtzeitbindungsstudien und zur Bestimmung kinetischer Parameter im Affinitätsscreening und in der Forschung, zu qualitativen und quantitativen Analytbestimmungen, insbesondere für die DNA- und RNA-Analytik, für die Erstellung von Toxizitätsstudien sowie für die Bestimmung von Gen- oder Protein-Expressionsprofilen sowie zum Nachweis von Antikörpern, Antigenen, Pathogenen oder Bakterien in der pharmazeutischen Protduktentwicklung und -forschung, der Human- und Veterinärdiagnostik, der Agrochemischen Produktentwicklung und -forschung, der symptomatischen und präsymptomatischen Pflanzendiagnostik, zur Patientenstratifikation in der pharmazeutischen Produktentwicklung und für die therapeutische Medikamentenauswahl, zum Nachweis von Pathogenen, Schadstoffen und Erregern, insbesondere von Salmonellen, Prionen, Viren und Bakterien, in der Lebensmittel- und Umweltanalytik.

## Claims

1. Optical system for luminescence determination having a sensor platform, the sensor platform comprising an optical layer waveguide having a first optically transparent layer on a second optically transparent layer, the second optically transparent layer having a lower refractive index than the first optically transparent layer and excitation light (2, 3) being input into the first optically transparent layer through a diffraction grating (4) modulated in the layer, **characterised in that** the optical system comprises at least two excitation light sources and an optical component (1) having a plurality of discrete facets for beam deviation, and the divergence angle between excitation light (2, 3) striking different facets of the optical component in the beam path coming from the said optical component is increased or decreased at least by a factor of 1.2 relative to the original divergence angle.

2. Optical system according to Claim 1, **characterised in that** the divergence angle between excitation light (2, 3) striking different facets of the optical component in the beam path coming from the said optical component is increased at least by a factor of 1.2, preferably by more than a factor of 1.5, relative to the original divergence angle.

3. Optical system according to one of Claims 1 - 2, **characterised in that** the said optical component (1) having a plurality of discrete facets for beam deviation is a multifaceted mirror having planar or curved facets, preferably planar facets.

4. Optical system according to one of Claims 1 - 2, **characterised in that** the said optical component (1) having a plurality of discrete facets for beam deviation is a multifaceted prism having planar or curved facets, preferably planar facets.

5. Optical system according to one of Claims 1 - 4, **characterised in that** light from two or more excitation sources with the same wavelength or different wavelengths strikes different facets of the said optical component (1).

6. Optical system according to one of Claims 1 - 4, **characterised in that** a separate facet, which the said excitation light (2, 3) strikes, of the said optical component (1) is provided for each different excitation wavelength.

7. Optical system according to one of Claims 1 - 6, **characterised in that** excitation light (2, 3) of different wavelengths is deviated in predetermined different directions with an offset of the beam centres on the said sensor platform equal to less than 0.2 mm.

8. Optical system according to one of Claims 4 - 7, **characterised in that** the multifaceted prism additionally comprises measures by which reflections of the excitation light (2, 3) by the sensor platform are diverted or masked.

9. Optical system according to one of Claims 4 - 8, **characterised in that** one or more reflective facets of the multifaceted prism are partially or fully mirrored.

10. Optical system according to one of Claims 1 - 9, **characterised in that** additional optical elements for spectral selection of the excitation wavelength, for example interference or edge filters, and optionally additional optical elements for beam attenuation, for example neutral or grey optical filters, optionally designed as profiled filters with a continuous transmission gradient, and/or further elements for beam guidance, for example glass fibres, optionally with microlenses or diffractive optical elements connected to them, are located in the optical path of the excitation light (2, 3) between the at least one excitation light source and the optical component (1) having a plurality of discrete facets for beam deviation.

11. Optical system according to one of Claims 1 - 10, **characterised in that** two or more lasers with different excitation wavelengths are used as excitation light sources.

12. Optical system according to one of Claims 1 - 11, **characterised in that** additional optical elements in the excitation beam path between the light sources and the sensor platform are used to generate a desired beam profile on the sensor platform, for example diffractive optical elements and/or lenses for beam expansion and/or generation of a parallel beam and/or diaphragms or masks for partial beam masking.

13. Optical system according to one of Claims 1 - 12, **characterised in that** the sensor platform comprises a multiplicity of discrete measurement regions, in which biological or biochemical or synthetic recognition elements for detecting one or more analyte are immobilised.

14. Optical system according to one of Claims 1 - 13, **characterised in that** up to 100,000 measurement regions are arranged in a 2-dimensional arrangement on the sensor platform.

15. Optical system according to one of Claims 1 - 14, **characterised in that** an individual measurement region occupies an area of 0.001-6 mm².

16. Optical system according to one of Claims 1 - 15, **characterised in that** an adhesion promoter layer is applied between the biological or biochemical or synthetic recognition elements and the sensor platform.

17. Optical system according to Claim 16, **characterised in that** the adhesion promoter layer has a thickness of less than 200 nm, preferably less than 20 nm, and **in that** the adhesion promoter layer preferably comprises a chemical compound from the groups which comprise silanes, epoxides, functionalised, charged or polar polymers and "self-organised passive or functionalised monolayers or double layers".

18. Optical system according to one of Claims 1 - 17, **characterised in that** spatially separated measurement regions are produced on the sensor platform by spatially selective application of biological or biochemical or synthetic recognition elements onto the said sensor platform.

19. Optical system according to Claim 18, **characterised in that** components from the group which is formed by nucleic acids (for example DNA, RNA, oligonucleotides) and nucleic acid analogues (for example PNA) mono- or polyclonal antibodies, peptides, enzymes, aptamers, synthetic peptide structures, soluble membrane-bound proteins and proteins isolated from a membrane, for example receptors, their ligands, antigens for antibodies, "histidine tag components" and their sequestering partners, cavities generated by chemical synthesis to receive molecular imprints, etc. are applied as the said biological or biochemical or synthetic recognition elements.

20. Optical system according to Claim 18, **characterised in that** cells, cell components, cell membranes or fragments thereof are applied as biological or biochemical or synthetic recognition elements.

21. Optical system according to one of Claims 18 - 20, **characterised in that** regions between the spatially separated measurement regions are "passivated" in order to minimise non-specific binding of analytes or their detection substances, i.e. compounds which are "chemically neutral" in relation to the analyte are applied between the spatially separated measurement regions, preferably for example consisting of the groups which are formed by albumins, in particular bovine serum albumin or human serum albumin, casein, non-specific polyclonal or monoclonal antibodies which are xenogeneic or empirically non-specific for the analyte or analytes to be detected (in particular for immunoassays), detergents - for example Tween 20, fragmented natural or synthetic DNA which does not hybridise with polynucleotides to be analysed, for example an extract of herring or salmon sperm (in particular for polynucleotide hybridisation assays), or uncharged but hydrophilic polymers, for example polyethylene glycols or dextrans.

22. Optical system according to one of Claims 1 - 21, **characterised in that** the luminescent light from the measurement regions on the sensor platform is directed onto at least one optoelectronic detector.

23. Optical system according to one of Claims 1 - 22, **characterised in that** the luminescent light from the measurement regions is projected onto a spatially resolving detector, which is preferably selected from the group which is formed by CCD cameras, CCD chips, photodiode arrays, avalanche diode arrays, multichannel plates and multichannel photomultipliers.

24. Optical system according to one of Claims 1 - 23, **characterised in that** the luminescent light from the measurement regions is projected through a system comprising one or more lenses and/or mirrors onto the at least one optoelectronic detector.

25. Optical system according to one of Claims 1 - 24, **characterised in that** one or more optical elements, for example diffractive elements, interference filters or edge filters, for selecting the emission wavelength and discriminating from light with a different wavelength are located in the emission beam path between the sensor platform and the at least one optoelectronic detector for recording the luminescence emitted by the measurement regions.

26. Optical system according to Claim 25, **characterised in that** the emission beam path has a divergence or convergence of less than 15° at the position where the said optical elements for spectral selection of the emission wavelength are installed.

27. Optical system according to one of Claims 25 - 26, **characterised in that** the optical elements, for example interference filters or edge filters, for selecting the emission wavelength and discriminating from light with a different wavelength are located between the two halves of a tandem objective.

28. Optical system according to one of Claims 1 - 27, **characterised in that** the sensor platform comprises an optically transparent substrate, preferably made of glass or a thermoplastic, on which the biological or biochemical or synthetic recognition elements are immobilised in the measurement regions.

29. Optical system according to one of Claims 1 - 28, **characterised in that** the sensor platform comprises a planar optical waveguide.

30. Optical system according to Claim 29, **characterised in that** excitation light (2, 3) is input into the first optically transparent layer through relief gratings modulated in the layer.

31. Optical system according to Claim 30, **characterised in that** grating structures in the first waveguiding layer of the sensor platform are arranged in a one- or two-dimensional array, following which in the propagation direction of the excitation light (2, 3) to be input there are unstructured regions of the first waveguiding layer on which arrays of 2 or more measurement regions are arranged, which may optionally also be closed fluid-tightly from one another in discrete sample containers.

32. Optical system according to one of Claims 30 - 31, **characterised in that** two grating structures for the output of excitation light (2, 3) and luminescent light possibly sent back into the first waveguiding layer are provided on the sensor platform in addition to the grating structures (4) for the input of excitation light (2, 3), in order for the light guided in the first waveguiding layer to be subsequently output again to an input grating structure after having travelled through the measurement regions, for example in the propagation direction of the guided excitation light (2, 3).

33. Optical system according to one of Claims 30 - 32, **characterised in that** grating structures (4) for the input of excitation light and optionally second grating structures for the output of excitation light are arranged discretely for individual segments, for example arrangements in one- or two-dimensional arrays, of measurement regions.

34. Optical system according to one of Claims 30 - 32, **characterised in that** grating structures (4) for the input of excitation light and optionally second grating structures for the output of excitation light are arranged perpendicularly to the propagation direction of the excitation light to be input, in continuous strips or columns over the entire sensor platform.

35. Optical system according to one of Claims 32 - 34, **characterised in that** grating structures for the output of excitation light are also used in sequential conduct of measurements as input gratings (4) for the input of excitation light.

36. Optical system according to one of Claims 32 - 35, **characterised in that** grating structures (4) for the input and grating structures for the output of light from the first waveguiding layer of the sensor platform have the same period and are modulated continuously below all measurement regions of the sensor platform.

37. Optical system according to one of Claims 29 - 36, **characterised in that** the product of the thickness of the first waveguiding layer of the sensor platform and its refractive index is from one tenth to the whole of, preferably from one third to two thirds of the excitation wavelength of excitation light to be input into this first waveguiding layer.

38. Optical system according to one of Claims 29 - 37, **characterised in that** a thin metal layer, preferably of gold or silver, is applied between the first optically transparent layer of the sensor platform and the immobilised biological or biochemical or synthetic recognition elements, optionally on an additional dielectric layer having a lower refractive index than the first waveguiding layer, for example of silica or magnesium fluoride, the thicknesses of the metal layer and the optional further interlayer being selected so that a surface plasmon can be excited at the excitation wavelength and/or the luminescence wavelength.

39. Optical system according to one of Claims 1 - 38, **characterised in that** optically or mechanically recognizable markings are applied on the sensor platform for facilitating adjustment in an optical system and/or for connection to sample containers as part of an analytical system and/or as an aid for subsequent image evaluation.

40. Optical system according to one of Claims 1 - 39, **characterised in that** the sensor platform carries identification, for example in the form of a barcode.

41. Optical system according to one of Claims 1 - 40, **characterised in that** the excitation light (2, 3) of the two or more light sources is in each case essentially monochromatic.

42. Optical system according to one of Claims 1 - 41, **characterised in that** the excitation light (2, 3) of different light sources is shone simultaneously from different directions onto the sensor platform, the offset between the beam centres on the sensor platform being less than 0.2 mm.

43. Optical system according to one of Claims 1 - 42, **characterised in that** optical components (1) from the group which is formed by lenses or lens systems for shaping the transmitted light bundles, planar or curved mirrors for diverting and optionally also for shaping light bundles, prisms for diverting and optionally for spectrally splitting light bundles, dichroic mirrors for spectrally selectively diverting parts of light bundles, neutral filters for controlling the transmitted light intensity, optical filters or monochromators for spectrally selectively transmitting parts of light bundles or polarisation-selective elements for selecting discrete polarisation directions of the excitation or luminescent light, are used between the sensor platform and the one or more detectors.

44. Optical system according to one of Claims 1 - 43, **characterised in that** the excitation light (2, 3) is input in pulses with a duration of between 1 fsec and 10 minutes.

45. Optical system according to one of Claims 1 - 44, **characterised in that** the emission light from the measurement regions is measured in a time-resolved fashion.

46. Optical system according to one of Claims 1 - 45, **characterised in that** light signals from the group which is formed by excitation light at the position of the light sources or after its expansion or after its splitting into sub-beams, scattered light at the excitation wavelength from the region of the one or more spatially separated measurement regions, and light at the excitation wavelength output through optionally provided grating structures (4) for input of the excitation light or grating structures for output of the excitation light, besides the measurement regions, are measured for referencing.

47. Optical system according to Claim 46, **characterised in that** the measurement regions for determination of the emission light and the reference signal fully or partially overlap, and they are preferably identical.

48. Optical system according to one of Claims 32 - 47, **characterised in that** the adjustment, for optimal input of excitation light (2, 3) through an input grating (4) for input of the excitation light to measurement regions located in the propagation direction of the light being input, is optimised by maximising the excitation light recorded by a detector and output through an output grating, this optimisation preferably being carried out under computer control.

49. Optical system according to Claim 48, **characterised in that** the optical component (1) having a plurality of discrete facets for beam deviation is rotated about an axis lying inside or outside this optical component (1) in order to optimise the adjustment of the coupling angle.

50. Optical system according to Claim 49, **characterised in that** the optical component (1) having a plurality of discrete facets for beam deviation is mounted on a rotation element having a rotation axis inside or outside this optical component (1), so that the beam offset on the sensor platform is less than 0.3 mm when the component is rotated about the said rotation axis by less than 5°.

51. Optical system according to one of Claims 48 - 50, **characterised in that** a translation of the sensor platform parallel or perpendicular to the grating lines is carried out in order to optimise the coupling position.

52. Optical system according to one of Claims 47 - 51, **characterised in that** the adjustment is optimised by means of maximising one or more reference signals from one or more measurement regions on the sensor platform, this optimisation preferably being carried out under computer control.

53. Optical system according to Claim 52, **characterised in that** the said reference signal comprises scattered light at the excitation wavelength.

54. Optical system according to Claim 52, **characterised in that** the said reference signal comprises luminescent light from measurement regions provided for the purpose of referencing and/or adjustment.

55. Optical system according to one of Claims 13 - 54, **characterised in that** the shining of the excitation light (2, 3) and detection of the emission light of one or more measurement regions are carried out sequentially for individual measurement regions or a plurality of measurement regions.

56. Optical system according to Claim 55, **characterised in that** the sensor platform is moved between steps of the sequential excitation and detection.

57. Analytical system for the luminescent detection of one or more analytes in at least one sample on one or more measurement regions on a sensor platform, having
- an optical system according to one of Claims 1 - 56,
- supply means for bringing one or more samples into contact with the measurement regions on the sensor platform.

58. Analytical system according to Claim 57, **characterised in that** it additionally comprises one or more sample containers which are open towards the sensor platform at least in the region of the one or more measurement regions or the measurement regions combined to form segments.

59. Analytical system according to Claim 58, **characterised in that** the sample containers each have a volume of 0.1 nl-100 µl.

60. Analytical system according to one of Claims 58 - 59, **characterised in that** the sample containers are closed on the opposite side from the first optically transparent layer, apart from inlet and outlet openings for supplying or discharging samples and optionally additional reagents, and the supply or discharge of samples and optionally additional reagents takes place in a closed flow system, and in the case of liquid supply to a plurality of measurement regions or segments having common inlet and outlet openings, these are preferably addressed in row by row or column by column.

61. Analytical system according to one of Claims 58 - 60, **characterised in that** the supply of the samples and optionally additional reagents takes place in parallel or crossed microchannels, under the effect of pressure differences or electrical or electromagnetic potentials.

62. Analytical system according to one of Claims 58 - 61, **characterised in that** the sample containers have openings, for locally addressed addition or removal of the samples or other reagents, on the opposite side from the first optically transparent waveguiding layer.

63. Analytical system according to one of Claims 58 - 62, **characterised in that** the sample containers are arranged in an array comprising the sensor platform as a base plate and a body combined with it so that an array of spatial recesses is produced between the base plate and the said body, in order to produce an array of mutually fluidically sealed flow cells each with at least one inlet and at least one outlet, and **in that** at least one outlet of each flow cell leads into a reservoir, fluidically connected to this flow cell, which receives the liquid flowing out of the flow cell.

64. Analytical system according to Claim 63, **characterised in that** the reservoir for receiving liquid flowing out of the flow cell is formed as an indentation in the outer wall of the body combined with the base plate.

65. Analytical system according to one of Claims 57 - 64, **characterised in that** it comprises 2-2000, preferably 2-400, particularly preferably 2-100 sample containers.

66. Analytical system according to one of Claims 57 - 65, **characterised in that** the grid, for example the succession in rows and/or columns, of the inlets of the sample containers corresponds to the grid of the wells of a standard microtitre plate.

67. Analytical system according to one of Claims 57 - 65, **characterised in that** the arrangement of sample containers, having the sensor platform as a base plate and the body combined with it, has the basic dimensions or footprint of a standard microtitre plate.

68. Analytical system according to one of Claims 57 - 65, having for example from 2 to 8 sample containers in a column or for example from 2 to 12 sample containers in a row, **characterised in that** they are in turn combined with a carrier, or meta-carrier, having the dimensions of standard microtitre plates so that the grid or succession in rows or columns of the inlets of the flow cells corresponds to the grid of the wells of a standard microtitre plate.

69. Analytical system according to one of Claims 57 - 68, **characterised in that** a removable protective bottom is arranged below the sensor platform as the base plate of an arrangement of sample containers, and the upper side of the arrangement of sample containers is optionally sealed by an additional closure, for example a film, membrane or a cover plate.

70. Analytical system according to Claim 69, **characterised in that** the protective bottom is removed automatically or semiautomatically before a measurement.

71. Analytical system according to one of Claims 57 - 70, comprising an optical system according to one of Claims 29 - 56, **characterised in that** each sample contained contains at least one grating structure (4), modulated in the first waveguiding layer of a sensor platform as the base plate, for the input of excitation light to the measurement regions.

72. Analytical system according to one of Claims 57 - 70, comprising an optical system as claimed in one of claims 32 - 56, **characterised in that** grating structures (4) for the input of excitation light are located inside the region of the sample containers, and additional grating structures for output of the excitation light are arranged outside the sample containers, in which the excitation light (2, 3) is respectively input.

73. Analytical system according to one of Claims 57 - 70, comprising an optical system as claimed in one of claims 32 - 56, **characterised in that** grating structures (4) for input of the excitation light, and optionally additionally provided grating structures for output of the excitation light, extend over the region of a plurality of or all the sample containers.

74. Analytical system according to one of Claims 57 - 73, **characterised in that** a sample container contains 5-5000, preferably 10-400 measurement regions.

75. Analytical system according to one of Claims 57 - 74, **characterised in that** it additionally comprises mechanical measures and a transport mechanism, with which automatic transport of an arrangement of sample containers, consisting of a sensor platform as the base plate and a body combined with it, takes place from the site of the introduction to the position of the luminescence excitation and detection and optionally back to the starting position.

76. Analytical system according to one of Claims 57 - 75, **characterised in that** it additionally comprises a reception device or "stacker" for receiving a multiplicity of arrangements of sample containers.

77. Analytical system according to Claim 76, **characterised in that** the loading of the "stacker" from the introduction site of the arrangement of sample containers, and its transport from there to the position of the luminescence excitation and detection and optionally back to the starting position, take place automatically.

78. Analytical system according to one of Claims 57 - 77, **characterised in that** it comprises one or more thermostattable zones.

79. Analytical system according to Claim 78, **characterised in that** the arrangement of sample containers and/or the excitation light sources and/or the one or more optoelectronic detectors and/or the "stacker" can be thermostatted separately.

80. Analytical system according to one of Claims 76 - 69, **characterised in that** the arrangement of sample containers and/or the excitation light sources and/or the one or more optoelectronic detectors and/or the "stacker" is operated at an air pressure higher than the ambient pressure.

81. Analytical system according to one of Claims 57 - 80, **characterised in that** it additionally comprises one or more electronic control components for monitoring the status of one or more optical or electrical or mechanical components, which can optionally generate an optical or acoustic or an electronic alarm signal.

82. Analytical system according to one of Claims 57 - 81, **characterised in that** it comprises measures by which introduction of an unsuitable sensor platform, for example with incorrect mechanical dimensions, is prevented.

83. Analytical system according to one of Claims 57 - 82, **characterised in that** it additionally comprises one or more electronic processors, connected to storage media and electronic connecting media, an input keyboard, a screen and a program code for automatic control.

84. Analytical system according to one of Claims 57 - 83, **characterised in that** the said analytical system and/or the measurement processes are operated automatically by means of predetermined initialisation files.

85. Analytical system according to one of Claims 57 - 84, **characterised in that** after a malfunction has been indicated, it is automatically put into a defined initial status and generated measurement data are optionally saved in a file.

86. Analytical system according to one of Claims 57 - 85, **characterised in that** a file, in which the identification of the sensor platform used and the essential parameters of the said measurement as well as the measurement data are stored, is generated in automated form for each measurement.

87. Analytical system according to one of Claims 57 - 86, **characterised in that** local variations in the excitation light intensity on the sensor platform and/or the detection sensitivity of the optical system for light signals at different positions on the sensor platform are corrected after recording the original data, by means of measures which comprise for example recording correction images at the excitation wavelength and/or one or more luminescence wavelengths, calculating theoretical distributions of the available excitation light intensity, theoretical calculations of the spatially resolved efficiency of the optical imaging and detection system etc.

88. Method for the luminescent detection of one or more analytes by using an analytical system as claimed in one of Claims 57 - 87, which comprises an optical system according to one of Claims 1 - 56, **characterised in that** one or more liquid samples, which are intended to be examined for the one or more analytes, are brought into contact with one or more measurement regions on the sensor platform, excitation light (2, 3) is fed into the measurement regions, substances capable of luminescence in the samples or on the measurement regions are excited in luminescence and the emitted luminescence is measured.

89. Method according to Claim 88, **characterised in that** at least one luminescent dye or luminescent nanoparticle, which can be excited and emits at a wavelength of between 300 nm and 1100 nm, is used for generating the luminescence.

90. Method according to one of Claims 88 - 89, **characterised in that** it comprises measures by which the dynamic range of the signal recording is extended at least by a factor of 3.

91. Method according to Claim 90, **characterised in that** the measures for extending the dynamic range comprise the use of differently long exposure times, i.e. the time for which the excitation light (2, 3) is shone and the integration time of the detector, which differ at least by a factor of 3.

92. Method according to Claim 90, **characterised in that** the measures for extending the dynamic range comprise a variation of the intensity of the excitation light (2, 3) available on the sensor platform by at least a factor of 3, for example by using discrete neutral filters in the excitation beam path, optionally formed as profiled filters with a continuous transmission gradient, or variation of the intensity of the light sources or modification of the adjustment of the sensor platform with respect to the excitation beam path.

93. Method according to one of Claims 88 - 92, **characterised in that** the at least one luminescent label is bound to the analyte, or in a competitive assay to an analogue of the analyte, or in a multistage assay to one of the binding partners of the immobilised biological or biochemical or synthetic recognition elements, or to the biological or biochemical or synthetic recognition elements.

94. Method according to one of Claims 88 - 93, **characterised in that** a second or further additional luminescent label is used, which has the same excitation wavelength as or a different excitation wavelength from the first luminescent label and an equal or different emission wavelength.

95. Method according to Claim 94, **characterised in that** charge or optical energy transfer from a first luminescent dye acting as a donor and a second luminescent dye acting as an acceptor is used to detect the analyte.

96. Method according to one of Claims 88 - 95, **characterised in that** the one or more luminescences and/or determinations of light signals at the excitation wavelength are carried out polarisation-selectively.

97. Method according to one of Claims 88 - 96, **characterised in that** the one or more luminescences are measured with a polarisation different from that of the excitation light (2, 3).

98. Method according to one of Claims 88 - 97 for the simultaneous or sequential, quantitative or qualitative determination of one or more analytes from the group of antibodies or antigens, receptors or ligands, chelators or "histidine tag components", oligonucleotides, DNA or RNA strands, DNA or RNA analogues, enzymes, enzyme cofactors or inhibitors, lectins and carbohydrates.

99. Method according to one of Claims 88 - 98, **characterised in that** the samples to be examined are naturally occurring body fluids such as blood, serum, plasma, lymph or urine or egg yolk or optically turbid liquids or body fluids or surface water or soil or plant extracts or bioprocess or synthesis process liquors or are taken from biological tissue parts or from cell cultures or extracts.

100. Use of an optical system according to one of claims 1 - 56 and/or an analytical system according to one of Claims 57 - 87 and/or a method according to at least one of Claims 88 - 99 for quantitative or qualitative analyses in order to determine chemical, biochemical or biological analytes in screening methods in pharmaceutical research, combinatorial chemistry, clinical and preclinical development, real-time binding studies and in order to determine kinetic parameters in affinity screening and in research, for qualitative and quantitative analyte determinations, in particular for DNA and RNA analysis, for compiling toxicity studies and for the determination of gene or protein expression profiles and for the detection of antibodies, antigens, pathogens or bacteria in pharmaceutical product development and research, human and veterinary diagnosis, agrochemical product development and research, symptomatic and presymptomatic plant diagnosis, for patient stratification in pharmaceutical product development and for therapeutic medication selection, for the detection of pathogens, pollutants and microbes, in particular salmonellas, prions, viruses and bacteria, in food and environmental analysis.

## Revendications

1. Système optique pour la détermination de la luminescence avec une plate-forme capteur, où la plate-forme capteur comprend un guide d'ondes optiques à couches avec une première couche optiquement transparente sur une deuxième couche optiquement transparente, où la deuxième couche optiquement transparente présente un indice de réfraction inférieur à celui de la première couche optiquement transparente et l'injection de la lumière d'excitation (2, 3) dans la première couche optiquement transparente a lieu par le biais de réseaux de diffraction (4) modulés dans la couche **caractérisé en ce que** le système optique comprend au moins deux sources lumineuses d'excitation ainsi qu'un composant optique (1) avec plusieurs facettes discrètes pour la déviation du faisceau et l'angle de divergence entre la lumière d'excitation (2, 3) parvenant sur des facettes différentes du composant optique dans la trajectoire du faisceau partant dudit composant optique est augmenté ou diminué d'au moins un facteur 1,2 par rapport à l'angle de divergence initial.

2. Système optique selon la revendication 1 **caractérisé en ce que** l'angle de divergence entre la lumière d'excitation (2, 3) parvenant sur des facettes différentes du composant optique dans la trajectoire du faisceau partant dudit composant optique est augmenté d'au moins un facteur 1,2, de préférence de plus d'un facteur 1,5, par rapport à l'angle de divergence initial.

3. Système optique selon l'une des revendications 1-2 **caractérisé en ce que** ledit composant optique (1) avec plusieurs facettes discrètes pour la déviation du faisceau est un miroir à facettes multiples avec des facettes planes ou incurvées, de préférence planes.

4. Système optique selon l'une des revendications 1-2 **caractérisé en ce que** ledit composant optique (1) avec plusieurs facettes discrètes pour la déviation du faisceau est un prisme à facettes multiples avec des facettes planes ou incurvées, de préférence planes.

5. Système optique selon l'une des revendications 1-4 **caractérisé en ce que** la lumière de deux ou plusieurs sources d'excitation de longueurs d'onde identiques ou différentes parvient sur des facettes différentes dudit composant optique (1).

6. Système optique selon l'une des revendications 1-4 **caractérisé en ce qu'**il est prévu pour chaque longueur d'onde d'excitation différente une facette propre dudit composant optique (1) sur laquelle parvient ladite lumière d'excitation (2, 3).

7. Système optique selon l'une des revendications 1-6 **caractérisé en ce que** la déviation du faisceau de la lumière d'excitation (2, 3) de longueurs d'onde différente a lieu dans des directions différentes prédéterminées avec un décalage des centres des faisceaux sur ladite plaque capteur inférieur à 0,2 mm.

8. Système optique selon l'une des revendications 4-7 **caractérisé en ce que** le prisme à facettes multiples comprend en outre des dispositions avec lesquelles les réflexions de la lumière d'excitation (2, 3) sont déviées ou obscurcies par la plate-forme capteur.

9. Système optique selon l'une des revendications 4-8 **caractérisé en ce qu'**une ou plusieurs facettes réfléchissantes du prisme à facettes multiples sont rendues partiellement ou totalement réfléchissantes.

10. Système optique selon l'une des revendications 1-9 **caractérisé en ce que**, dans le trajet optique de la lumière d'excitation (2, 3) entre la au moins une source lumineuse d'excitation et le composant optique (1) avec plusieurs facettes discrètes, se trouvent, pour la déviation du faisceau, des éléments optiques supplémentaires pour la sélection spectrale de la longueur d'onde d'excitation, comme par exemple des filtres d'interférence ou des filtres à arêtes, et éventuellement des éléments optiques supplémentaires pour l'affaiblissement du faisceau, comme par exemple des filtres neutres ou gris, éventuellement constitués sous forme de filtres dégradés avec un gradient de transmission continu, et/ou d'autres éléments pour le guidage du faisceau, comme par exemple des fibres de verre, éventuellement avec des micro-lentilles ou des éléments optiques diffractifs liés à ceux-ci.

11. Système optique selon l'une des revendications 1-10 **caractérisé en ce que** deux ou plusieurs lasers de longueurs d'onde d'émission différentes sont utilisés comme sources lumineuses d'excitation.

12. Système optique selon l'une des revendications 1-11 **caractérisé en ce que**, pour produire un profil de faisceau souhaité sur la plate-forme capteur dans la trajectoire du faisceau d'excitation entre les sources lumineuses et la plate-forme capteur, on utilise des éléments optiques supplémentaires qui comprennent par exemple des éléments optiques diffractifs et/ou des lentilles pour l'élargissement du faisceau et/ou la production d'un faisceau parallèle et/ou des diaphragmes ou des masques pour l'obscurcissement partiel du faisceau.

13. Système optique selon l'une des revendications 1-12 **caractérisé en ce que** la plate-forme capteur comprend une multiplicité de domaines de mesure discrets dans lesquels sont immobilisés des éléments d'identification biologiques ou biochimiques ou synthétiques pour la mise en évidence d'un ou plusieurs analytes.

14. Système optique selon l'une des revendications 1-13 **caractérisé en ce que** jusqu'à 100 000 domaines de mesure sont disposés sur la plate-forme capteur dans un agencement bidimensionnel.

15. Système optique selon l'une des revendications 1-14 **caractérisé en ce qu'**un seul domaine de mesure occupe une surface de 0,001-6 mm².

16. Système optique selon l'une des revendications 1-15 **caractérisé en ce qu'**une couche favorisant l'adhésion est appliquée entre les éléments d'identification biologiques ou biochimiques ou synthétiques et la plate-forme capteur.

17. Système optique selon la revendication 16 **caractérisé en ce que** la couche favorisant l'adhésion a une épaisseur inférieure à 200 nm, de préférence inférieure à 20 nm, et **en ce que** la couche favorisant l'adhésion comprend de préférence un composé chimique issu des groupes qui comprennent les silanes, les époxydes, les polymères chargés ou polaires fonctionnalisés et les "mono- ou doubles couches passives ou fonctionnalisées auto-organisées".

18. Système optique selon l'une des revendications 1-17 **caractérisé en ce que** des domaines de mesure spatialement séparés sont produits sur la plate-forme capteur par application spatialement sélective d'éléments d'identification biologiques ou biochimiques ou synthétiques sur ladite plate-forme capteur.

19. Système optique selon la revendication 18 **caractérisé en ce que**, comme lesdits éléments d'identification biologiques ou biochimiques ou synthétiques, sont appliqués des composants issus du groupe qui est formé par les acides nucléiques (par exemple ADN, ARN, oligonucléotides) et les analogues d'acides nucléiques (par exemple APN), les anticorps mono- ou polyclonaux, les peptides, les enzymes, les aptamères, les structures peptidiques synthétiques, les protéines solubles, liées à une membrane et isolées à partir d'une membrane, comme par exemple les récepteurs, leurs ligands, les antigènes pour des anticorps, les "composants marqueurs d'histidine" et leurs partenaires de complexation, les cavités produites par synthèse chimique pour la réception d'empreintes moléculaires, etc.

20. Système optique selon la revendication 18 **caractérisé en ce que** des cellules des constituants cellulaires, des membranes cellulaires ou leurs fragments sont utilisés comme éléments d'identification biologiques ou biochimiques ou synthétiques.

21. Système optique selon l'une des revendications 18-20 **caractérisé en ce que** des domaines entre les domaines de mesure spatialement séparés "sont passives" pour minimiser la liaison non spécifique d'analytes ou de leurs substances de mise en évidence, c'est-à-dire qu'entre les domaines de mesure spatialement séparés sont appliqués des composés "chimiquement neutres" à l'égard de l'analyte, consistant de préférence par exemple en les groupes qui sont formés par les albumines, en particulier la sérum albumine bovine ou la sérum albumine humaine, la caséine, les anticorps polyclonaux ou monoclonaux non spécifiques, étranger à l'espèce ou empiriquement non spécifiques pour le ou les analytes à mettre en évidence (en particulier pour des immunoanalyses), les détergents comme par exemple le Tween 20, l'ADN naturel, fragmenté ou synthétique qui ne s'hybride pas avec les polynucléotides à analyser, comme par exemple un extrait de sperme de hareng ou de saumon (en particulier pour les analyses d'hybridation de polynucléotides), ou encore les polymères non chargés mais hydrophiles, comme par exemple les polyéthylèneglycols ou les dextranes.

22. Système optique selon l'une des revendications 1-21 **caractérisé en ce que** la lumière de luminescence est guidée des domaines de mesure sur la plate-forme capteur sur au moins un détecteur optoélectronique.

23. Système optique selon l'une des revendications 1-22 **caractérisé en ce que** la lumière de luminescence est représentée des domaines de mesure sur un détecteur à résolution locale qui est choisi de préférence dans le groupe qui est formé par les appareils photographiques CCD, les puces CCD, les séries de photodiodes, les séries de diodes à avalanche, les plaques à canaux multiples et les photomultiplicateurs à canaux nombreux.

24. Système optique selon l'une des revendications 1-23 **caractérisé en ce que** la lumière de luminescence est représentée du domaine de mesure sur le au moins un détecteur optoélectronique par le biais d'un système constitué par une ou plusieurs lentilles et/ou un ou plusieurs miroirs.

25. Système optique selon l'une des revendications 1-24 **caractérisé en ce que**, dans la trajectoire du faisceau d'émission entre la plate-forme capteur et le au moins un détecteur opto-électronique se trouvent pour la représentation de la luminescence irradiée par les domaines de mesure un ou plusieurs éléments optiques, comme par exemple des éléments diffractifs, des filtres d'interférence ou des filtres à arêtes, pour la sélection de la longueur d'onde d'émission et la discrimination de la lumière d'une autre longueur d'onde.

26. Système optique selon la revendication 25 **caractérisé en ce que** la trajectoire du faisceau d'émission à l'endroit de l'insertion desdits éléments optiques pour la sélection spectrale de la longueur d'émission présente une divergence ou une convergence inférieure à 15°.

27. Système optique selon l'une des revendications 25-26 **caractérisé en ce que** les éléments optiques, comme par exemple les filtres d'interférence ou les filtres à arêtes, pour la sélection de la longueur d'onde d'émission et la discrimination de la longueur d'une autre longueur d'onde se trouvent entre les deux moitiés d'un objectif en tandem.

28. Système optique selon l'une des revendications 1-27 **caractérisé en ce que** la plate-forme capteur comprend un support optiquement transparent, de préférence en verre ou en une matière synthétique thermoplastique, sur lequel sont immobilisés les éléments d'identification biologiques, ou biochimiques ou synthétiques dans les domaines de mesure.

29. Système optique selon l'une des revendications 1-28 **caractérisé en ce que** la plate-forme capteur comprend un guide d'ondes optiques plan.

30. Système optique selon la revendication 29 **caractérisé en ce que** l'injection de la lumière d'excitation (2, 3) dans la première couche optiquement transparente a lieu par le biais de réseaux en relief modulés dans la couche.

31. Système optique selon la revendication 30 **caractérisé en ce que** des structures de réseaux dans la première couche de guidage d'onde de la plate-forme capteur sont disposées dans une série mono- ou bidimensionnelle, à laquelle peuvent faire suite dans chaque cas dans la direction d'élargissement de la lumière d'excitation (2, 3) à injecter des domaines non structurés de la première couche de guidage d'onde, sur lesquels sont disposées des séries de deux ou plusieurs domaines de mesure qui peuvent être séparés éventuellement en plus les uns par rapport aux autres de manière étanche aux fluides dans des récipients à échantillons discrets.

32. Système optique selon l'une des revendication 30-31 **caractérisé en ce qu'**il est prévu sur la plate-forme capteur, en plus des structures de réseaux (4) pour l'injection de la lumière d'excitation (2, 3), des secondes structures de réseaux pour l'éjection de la lumière d'excitation (2, 3) et éventuellement de la lumière de luminescence injectée en retour dans la première couche de guidage d'onde, pour éjecter la lumière introduite dans la première couche de guidage d'onde, après la traversée des domaines de mesure, par exemple dans la direction d'élargissement de la lumière d'excitation (2, 3) introduite, à la suite d'une structure de réseau d'injection.

33. Système optique selon l'une des revendications 30-32 **caractérisé en ce que** des structures de réseaux (4) pour l'injection de la lumière d'excitation et éventuellement des deuxièmes structures de réseaux pour l'éjection de la lumière d'excitation sont disposées de manière discrète pour des segments individuels, par exemple des agencements en séries mono- ou bi-dimensionnelles, de domaines de mesure.

34. Système optique selon l'une des revendications 30-32 **caractérisé en ce que** des structures de réseaux (4) pour l'injection de la lumière d'excitation et éventuellement des secondes structures de réseaux pour l'éjection de la lumière d'excitation sont formées perpendiculairement à la direction d'élargissement de la lumière d'excitation à injecter dans des bandes ou colonnes continues sur toute la plate-forme capteur.

35. Système optique selon l'une des revendication 32-34 **caractérisé en ce que** des structures de réseaux pour l'éjection de la lumière d'excitation dans la mise en oeuvre séquentielle de mesures sont utilisées également comme réseaux d'injection (4) pour l'injection de la lumière d'excitation.

36. Système optique selon l'une des revendications 32-35 **caractérisé en ce que** des structures de réseaux pour l'injection (4) et des structures de réseaux pour l'éjection de la lumière depuis la première couche de guidage d'onde de la plate-forme capteur ont la même période et sont modulées de manière continue parmi tous les domaines de mesure de la plate-forme capteur.

37. Système optique selon l'une des revendications 29-36 **caractérisé en ce que** le produit de l'épaisseur de la première couche de guidage d'onde de la plate-forme capteur et de son indice de réfraction représente un dixième à une unité, de préférence un tiers à deux tiers, de la longueur d'onde d'excitation d'une lumière d'excitation à injecter dans cette première couche de guidage d'onde.

38. Système optique selon l'une des revendications 29-37 **caractérisé en ce qu'**entre la première couche optiquement transparente de la plate-forme capteur et les éléments d'identification biologiques ou biochimiques ou synthétiques immobilisés est appliquée une couche métallique mince, de préférence en or ou en argent, éventuellement sur une couche diélectrique supplémentaire à plus faible indice de réfraction que la première couche de guidage d'onde, par exemple en silice ou en fluorure de magnésium, où l'épaisseur de la couche métallique et de l'éventuelle autre couche intermédiaire est choisie de telle manière qu'un plasmon de surface peut être excité à la longueur d'onde d'excitation et/ou à la longueur de luminescence.

39. Système optique selon l'une des revendications 1-38 **caractérisé en ce que** des marquages optiquement ou mécaniquement identifiables sont appliqués sur la plate-forme capteur pour faciliter le réglage dans un système optique et/ou pour la liaison avec des récipients à échantillons en tant que partie d'un système analytique et/ou en tant qu'auxiliaire pour une évaluation d'image subséquente.

40. Système optique selon l'une des revendications 1-39 **caractérisé en ce que** la plate-forme capteur porte une caractérisation, par exemple sous forme d'un code barres.

41. Système optique selon l'une des revendications 1-40 **caractérisé en ce que** la lumière d'excitation (2, 3) des deux ou plusieurs sources lumineuses est dans chaque cas sensiblement monochromatique.

42. Système optique selon l'une des revendications 1-41 **caractérisé en ce que** la lumière d'excitation (2, 3) de sources lumineuses différentes est irradiée simultanément depuis des directions différentes sur la plate-forme capteur, où le décalage entre les centres des faisceaux sur la plate-forme capteur est inférieur à 0,2 mm.

43. Système optique selon l'une des revendications 1-42 **caractérisé en ce qu'**entre la plate-forme capteur et le un ou plusieurs détecteurs sont utilisés des composants optiques (1) du groupe formé par les lentilles ou les systèmes de lentilles pour la conception du faisceau lumineux transmis, les miroirs plans ou incurvés pour la déviation et éventuellement en outre pour la conception de faisceaux lumineux, les prismes pour la déviation et éventuellement pour la répartition spectrale de faisceaux lumineux, les miroirs dichroïques pour la déviation spectralement sélective de parties de faisceaux lumineux, les filtres neutres pour le réglage de l'intensité lumineuse transmise, les filtres optiques ou les monochromateurs pour la transmission spectralement sélective de parties de faisceaux lumineux ou les éléments sélectifs pour la polarisation pour le choix de directions de polarisation discrètes de la lumière d'excitation ou de luminescence.

44. Système optique selon l'une des revendications 1-43 **caractérisé en ce que** l'irradiation de la lumière d'excitation (2, 3) a lieu par impulsions d'une durée entre 1 fs et 10 minutes.

45. Système optique selon l'une des revendications 1-44 **caractérisé en ce que** la lumière d'émission issue des domaines de mesure est mesurée à résolution dans le temps.

46. Système optique selon l'une des revendications 1-45 **caractérisé en ce que**, pour le référencement, des signaux lumineux du groupe formé par la lumière d'excitation à l'endroit des sources lumineuses ou après son élargissement, ou après sa subdivision en faisceaux partiels, la lumière diffusée à la longueur d'onde d'excitation issue du domaine du un ou plusieurs domaines de mesure spatialement séparés et la lumière de la longueur d'onde d'excitation éjectée par le biais de structures de réseaux (4) éventuellement présentes pour l'injection de la lumière d'excitation ou de structures de réseau pour l'éjection de la lumière d'excitation à côté des domaines de mesure sont mesurés.

47. Système optique selon la revendication 46 **caractérisé en ce que** les domaines de mesure pour la détermination de la lumière d'émission et du signal de référence se chevauchent totalement ou partiellement, en étant de préférence identiques.

48. Système optique selon l'une des revendications 32-47 **caractérisé en ce que** l'optimisation du réglage pour l'injection optimale de la lumière d'excitation (2, 3) a lieu par le biais d'un réseau d'injection (4) pour l'injection de la lumière d'excitation vers des domaines de mesure situés dans la direction d'élargissement de la lumière injectée par maximisation de la lumière d'excitation détectée par un détecteur et éjectée par le biais d'un réseau d'éjection, cette optimisation étant de préférence commandée par l'ordinateur.

49. Système optique selon la revendication 48 **caractérisé en ce que**, pour l'optimisation du réglage de l'angle de couplage, une rotation du composant optique (1) avec plusieurs facettes discrètes pour la déviation du faisceau a lieu autour d'un axe situé à l'intérieur ou à l'extérieur de ce composant optique (1).

50. Système optique selon la revendication 49 **caractérisé en ce que** le composant optique (1) avec plusieurs facettes discrètes pour la déviation du faisceau est monté sur un élément rotatif avec un axe de rotation à l'intérieur ou à l'extérieur de ce composant optique (1) de telle manière que, lors d'une rotation du composant autour dudit axe de rotation de moins de 5° le décalage du faisceau sur la plate-forme capteur est inférieur à 0,3 mm.

51. Système optique selon l'une des revendications 48-50 **caractérisé en ce que**, pour l'optimisation de la position de couplage sur la plate-forme capteur, une translation de la plate-forme capteur parallèlement ou perpendiculairement aux lignes du réseau a lieu.

52. Système optique selon l'une des revendications 47-51 **caractérisé en ce que** l'optimisation du réglage est réalisé au moyen d'une maximisation d'un ou plusieurs signaux de référence d'un ou plusieurs domaines de mesure sur la plate-forme capteur, cette optimisation étant de préférence commandée par l'ordinateur.

53. Système optique selon la revendication 52 **caractérisé en ce que** ledit signal de référence est de la lumière diffusée à la longueur d'onde d'excitation.

54. Système optique selon la revendication 52 **caractérisé en ce que** ledit signal de référence est de la lumière de luminescence issue de domaines de mesures prévus à des fins de référencement et/ou de réglages.

55. Système optique selon l'une des revendications 13-54 **caractérisé en ce que** l'irradiation de la lumière d'excitation (2, 3) sur et la détection de la lumière d'émission depuis un ou plusieurs domaines de mesure ont lieu séquentiellement pour des domaines de mesure individuels ou pour plusieurs domaines de mesures.

56. Système optique selon l'une des revendications 55 **caractérisé en ce que** la plate-forme capteur est déplacée entre des étapes de l'excitation séquentielle et de la détection séquentielle.

57. Système analytique pour la mise en évidence de luminescence d'un ou plusieurs analytes dans au moins un échantillon sur un ou plusieurs domaines de mesure sur une plate-forme capteur avec
- un système optique selon l'une des revendications 1-56,
- des moyens d'apport pour mettre en contact les un ou plusieurs échantillons avec les domaines de mesure sur la plate-forme capteur.

58. Système analytique selon la revendication 57 **caractérisé en ce que** celui-ci comprend en outre un ou plusieurs récipients à échantillons qui sont ouverts au moins dans le domaine du un ou plusieurs domaines de mesure ou des domaines de mesure rassemblés en segments vers la plate-forme capteur.

59. Système analytique selon la revendication 58 **caractérisé en ce que** les récipients à échantillons ont chacun un volume de 0,1 nl - 100 µl.

60. Système analytique selon l'une des revendications 58-59 **caractérisé en ce que** les récipients à échantillons sont fermés du côté opposé à la première couche optiquement transparente, à l'exception d'ouvertures d'entrée et/ou de sortie pour l'apport ou l'évacuation des échantillons et éventuellement de réactifs supplémentaires, et l'apport ou l'évacuation des échantillons et éventuellement de réactifs supplémentaires ont lieu dans un système à écoulement fermé où, dans le cas de l'apport de liquide à plusieurs domaines de mesure ou segments avec des ouvertures d'entrée et de sortie communes, ceux-ci sont de préférence adressés par colonnes ou par lignes.

61. Système analytique selon l'une des revendications 58-60 **caractérisé en ce que** l'apport des échantillons et éventuellement de réactifs supplémentaires a lieu dans des microcanaux parallèles ou croisés sous l'effet de différences de pression ou de potentiels électriques ou électromagnétiques.

62. Système analytique selon l'une des revendications 58-61 **caractérisé en ce que** les récipients à échantillons possèdent du côté opposé à la première couche de guidage d'onde optiquement transparente des ouvertures pour l'apport adressé localement ou l'élimination des échantillons ou d'autres réactifs.

63. Système analytique selon l'une des revendications 58-62 **caractérisé en ce que** les récipients à échantillons sont disposés dans une série comprenant la plate-forme capteur comme plaque de base et un corps ainsi composé de telle sorte qu'entre la plaque de base et ledit corps est formée une série d'évidement spatiaux pour la production d'une série de cellules de flux rendues mutuellement étanches aux fluides avec, dans chaque cas, au moins une amenée et au moins une évacuation et **en ce qu'**au moins une évacuation de chaque cellule de flux conduit dans un réservoir relié par fluide à cette cellule de flux, qui reçoit le liquide sortant de cette cellule de flux.

64. Système analytique selon la revendication 63 **caractérisé en ce que** le réservoir pour recevoir le liquide sortant de la cellule de flux est formé sous forme d'un évidement dans la paroi externe du corps assemblé avec la plaque de base.

65. Système analytique selon l'une des revendications 57-64 **caractérisé en ce qu'**il comprend 2-2 000, de préférence 2-400, de manière particulièrement préférée 2-100 récipients à échantillons.

66. Système analytique selon l'une des revendications 57-65 **caractérisé en ce que** la trame, par exemple succession en lignes et/ou colonnes, des amenées des récipients à échantillons correspond à la trame des puits d'une microplaque de titrage standard.

67. Système analytique selon l'une des revendications 57-65 **caractérisé en ce que** l'agencement de récipients à échantillons avec la plate-forme capteur comme plaque de base et le corps assemblé avec elle a les dimensions de base ou l'empreinte d'une microplaque de titrage standard.

68. Système analytique selon l'une des revendications 57-65 avec par exemple 2 à 8 récipients à échantillons dans une colonne ou par exemple 2 à 12 récipients à échantillons dans une ligne, **caractérisé en ce que** ceux-ci sont assemblés pour leur part avec un support, ou "méta-support", avec les dimensions de microplaques de titrage standards de telle sorte que la trame ou succession en lignes ou colonnes des amenées des cellules de flux correspond à la trame des puits d'une microplaque de titrage standard.

69. Système analytique selon l'une des revendications 57-68 **caractérisé en ce qu'**un plancher de protection amovible est disposé sous la plate-forme capteur à titre de plaque de base d'un agencement de récipients à échantillons et éventuellement le côté supérieur de l'agencement de récipients à échantillons est fermé par une fermeture supplémentaire, par exemple une feuille, une membrane ou une plaque de recouvrement.

70. Système analytique selon la revendication 69 **caractérisé en ce que** le plancher de protection est retiré automatiquement ou semi-automatiquement avant une mesure.

71. Système analytique selon l'une des revendications 57-70 comprenant un système optique selon l'une des revendications 29-56 **caractérisé en ce qu'**à l'intérieur de chaque récipient à échantillons se trouve au moins une structure de réseau (4) modulée dans la première couche de guidage d'onde d'une plate-forme capteur à titre de plaque de base pour l'injection de la lumière d'excitation dans les domaines de mesure.

72. Système analytique selon l'une des revendications 57-70 comprenant un système optique selon l'une des revendications 32-56 **caractérisé en ce que** des structures de réseau (4) pour l'injection de la lumière d'excitation à l'intérieur du domaine des récipients à échantillons et des structures de réseaux supplémentaires pour l'éjection de la lumière d'excitation se trouvent chacune à l'extérieur des récipients à échantillons dans lesquels, dans chaque cas, a lieu l'injection de la lumière d'excitation (2, 3).

73. Système analytique selon l'une des revendications 57-70 avec un système optique selon l'une des revendications 32-56 **caractérisé en ce que** des structures de réseaux (4) pour l'injection de la lumière d'excitation et éventuellement des structures de réseaux présentes en plus pour l'éjection de la lumière d'excitation s'étendent au-dessus du domaine de plusieurs récipients à échantillons ou de tous les récipients à échantillons.

74. Système analytique selon l'une des revendications 57-73 **caractérisé en ce que** 5-5 000, de préférence 10-400 domaines de mesure se trouvent dans un récipient à échantillons.

75. Système analytique selon l'une des revendications 57-74 **caractérisé en ce qu'**il comprend en outre des dispositions mécaniques et un mécanisme de transport au moyen desquels il se produit un transport automatisé d'un agencement de récipients à échantillons, consistant en une plate-forme capteur à titre de plaque de base et en un corps assemblé avec celle-ci, de l'endroit de l'introduction jusqu'à la position de l'excitation et de la détection de la luminescence et éventuellement de nouveau jusqu'à la position initiale.

76. Système analytique selon l'une des revendications 57-75 **caractérisé en ce qu'**il comprend en outre un dispositif de réception ou "stacker" pour la réception d'une multiplicité d'agencements de récipients à échantillons.

77. Système analytique selon la revendication 76 **caractérisé en ce que** le chargement du "stacker" de l'endroit de l'introduction de l'agencement de récipients à échantillons et de là son transport jusqu'à la position de l'excitation et de la détection de la luminescence et éventuellement de nouveau jusqu'à la position initiale se déroulent automatiquement.

78. Système analytique selon l'une des revendications 57-77 **caractérisé en ce qu'**il comprend une ou plusieurs zones pouvant être thermostatées.

79. Système analytique selon la revendication 78 **caractérisé en ce que** l'agencement de récipients à échantillons et/ou des sources lumineuses d'excitation et/ou des un ou plusieurs détecteurs optoélectroniques et/ou du "stacker" peuvent être thermostatés séparément.

80. Système analytique selon l'une des revendications 76-79 **caractérisé en ce que** l'agencement de récipients à échantillons et/ou des sources lumineuses d'excitation et/ou des un ou plusieurs détecteurs optoélectroniques et/ou du "Stacker" est amené à fonctionner à une pression d'air plus élevée que la pression ambiante.

81. Système analytique selon l'une des revendications 57-80 **caractérisé en ce qu'**il comprend en outre un ou plusieurs composants de contrôle électroniques pour la surveillance de l'état d'un ou plusieurs composants optiques ou électriques ou mécaniques qui peuvent éventuellement produire un signal d'alarme optique ou acoustique ou électronique.

82. Système analytique selon l'une des revendications 57-81 **caractérisé en ce qu'**il comprend des dispositions avec lesquelles une introduction de plates-formes capteurs inappropriées, par exemple avec des dimensions mécaniques erronées, est évitée.

83. Système analytique selon l'une des revendications 57-82 **caractérisé en ce qu'**il comprend en outre un ou plusieurs processeurs électroniques, reliés à des moyens de mémoire et des moyens conducteurs électroniques, un clavier d'introduction, un écran et un code de programme pour la commande automatisée.

84. Système analytique selon l'une des revendications 57-83 **caractérisé en ce que** le fonctionnement du système analytique et/ou les processus de mesure ont lieu automatiquement au moyen de fichiers d'initialisation prédéterminés.

85. Système analytique selon l'une des revendications 57-84 **caractérisé en ce qu'**il est déplacé automatiquement dans un état initial défini après une fonction d'erreur indiquée et les données de mesure éventuellement produites sont sauvegardées dans un fichier.

86. Système analytique selon l'une des revendications 57-85 **caractérisé en ce qu'**un fichier dans lequel la caractérisation de la plate-forme capteur utilisée et les paramètres essentiels de ladite mesure ainsi que les données de mesure sont stockés est créé sous forme automatisée pour chaque mesure.

87. Système analytique selon l'une des revendications 57-86 **caractérisé en ce que** les variations locales de l'intensité de la lumière d'excitation sur la plate-forme capteur et/ou de la sensibilité de détection du système optique pour les signaux lumineux d'endroits différents sur la plate-forme capteur après réception des données originales sont corrigées au moyen de dispositions qui comprennent par exemple la réception d'images de correction à la longueur d'onde d'excitation et/ou à une ou plusieurs longueurs d'onde de luminescence, le calcul de répartitions théoriques de l'intensité de la lumière d'excitation disponible, des calculs théoriques de l'efficacité à résolution locale du système de représentation et de détection optique, etc.

88. Procédé pour la mise en évidence de la luminescence d'un ou plusieurs analytes, au moyen d'un système analytique selon l'une des revendications 57-87, qui comprend un système optique selon l'une des revendications 1-56, **caractérisé en ce qu'**un ou plusieurs échantillons liquides, qui doivent être étudiés en ce qui concerne le un ou plusieurs analytes, sont mis en contact avec un ou plusieurs domaine de mesure sur la plate-forme capteur, la lumière d'excitation (2, 3) est guidée dans les domaines de mesure, les substances capables de luminescence sont alors excitées dans les échantillons ou sur les domaines de mesure pour entrer en luminescence et la luminescence émise est mesurée.

89. Procédé selon la revendication 88 **caractérisé en ce que**, pour produire la luminescence, au moins un colorant de luminescence ou une nanoparticule luminescente est utilisé à titre d'étiquette de luminescence qui peut être excitée et émet à une longueur d'onde entre 300 nm et 1 100 nm.

90. Procédé selon l'une des revendications 88-89 **caractérisé en ce qu'**il comprend des dispositions avec lesquelles le domaine dynamique de la réception des signaux est élargi d'au moins un facteur 3.

91. Procédé selon la revendication 90 **caractérisé en ce que** les dispositions pour l'élargissement du domaine dynamique comprennent l'utilisation de durées d'éclairement de longueurs différentes, c'est-à-dire la durée d'irradiation de la lumière d'excitation (2, 3) et la durée d'intégration du détecteur, qui diffèrent d'au moins un facteur 3.

92. Procédé selon la revendication 90 **caractérisé en ce que** les dispositions pour élargir le domaine dynamique comprennent une variation de l'intensité de la lumière d'excitation (2, 3) disponible sur la plate-forme capteur d'au moins un facteur 3, par exemple par l'utilisation de filtres neutres discrets dans la trajectoire du faisceau d'excitation, éventuellement agencés sous forme de filtres dégradés avec un gradient continu de la transmission ou de la variation de l'intensité des sources lumineuses ou une modification du réglage de la plate-forme capteur concernant la trajectoire du faisceau d'excitation.

93. Procédé selon l'une des revendications 88-92 **caractérisé en ce que** la au moins une étiquette de luminescence est liée aux analytes ou, dans une analyse compétitive, à un analogue de l'analyte ou dans une analyse à plusieurs étapes à l'un des partenaires de liaison des éléments d'identification biologiques, ou biochimiques ou synthétiques immobilisés ou aux éléments d'identification biologiques ou biochimiques ou synthétiques.

94. Procédé selon l'une des revendications 88-93 **caractérisé en ce qu'**une seconde ou encore d'autres étiquettes de luminescence de même longueur d'onde d'excitation ou de longueur d'onde d'excitation différente de celle de la première étiquette de luminescence et de longueur d'onde d'émission identique ou différente sont utilisées.

95. Procédé selon la revendication 94 **caractérisé en ce que**, pour la mise en évidence de l'analyte, le transfert de charge ou d'énergie optique d'un premier colorant de luminescence servant de donneur à un deuxième colorant de luminescence servant d'accepteur est utilisé.

96. Procédé selon l'une des revendications 88-95 **caractérisé en ce que** les une ou plusieurs luminescences et/ou déterminations de signaux lumineux sont réalisées à la longueur d'onde d'excitation de manière sélective pour la polarisation.

97. Procédé selon l'une des revendications 88-96 **caractérisé en ce que** les unes ou plusieurs luminescences sont mesurées à une autre polarisation que celle de la lumière d'excitation (2, 3).

98. Procédé selon l'une des revendications 88-97 pour la détermination quantitative ou qualitative simultanée ou séquentielle d'un ou plusieurs analytes du groupe des anticorps ou des antigènes, des récepteurs ou des ligands, des chélates ou des "composants de marqueurs "histidine" des oligonucléotides, des brins d'ADN ou d'ARN, des analogues d'ADN ou d'ARN, des enzymes, des cofacteurs d'enzyme ou des inhibiteurs, des lectines et des glucides.

99. Procédé selon l'une des revendications 88-98 **caractérisé en ce que** les échantillons à étudier sont prélevés sur des liquides biologiques naturels comme le sang, le sérum, le plasma, la lymphe ou l'urine ou le jaune d'oeuf ou des liquides optiquement troubles ou des liquides tissulaires ou l'eau de surface ou des extraits de sols ou de plantes ou des bouillons de procédés biologiques ou de synthèses ou des parties de tissus biologiques ou de cultures cellulaires ou d'extraits cellulaires.

100. Utilisation d'un système optique selon l'une des revendications 1-56 et/ou d'un système analytique selon l'une des revendications 57-87 et/ou d'un procédé selon au moins l'une des revendications 88-99 pour des analyses quantitatives ou qualitatives pour la détermination d'analytes chimiques, biochimiques ou synthétiques dans des procédés de criblage en recherche pharmaceutique, en chimie combinatoire, dans le développement clinique et pré-clinique, pour des études de liaison en temps réel et pour la détermination de paramètres cinétiques dans le criblage d'affinité et dans la recherche, pour des déterminations qualitatives et quantitatives d'analytes, en particulier pour l'analyse de l'ADN et de l'ARN, pour la production d'études de toxicité ainsi que pour la détermination des profils d'expression de gènes ou de protéines ainsi que pour la mise en évidence d'anticorps, d'antigènes, de pathogènes ou de bactéries dans le développement de produits pharmaceutiques et la recherche pharmaceutique, dans le diagnostic humain et vétérinaire, le développement de produits agrochimiques et la recherche agrochimique, le diagnostic végétal symptomatique et pré-symptomatique, pour la stratification des patients dans le développement de produits pharmaceutiques et pour le choix de médicaments thérapeutiques, pour la mise en évidence de pathogènes, de substances nuisibles et d'agents pathogènes, en particulier les salmonelles, les prions, les virus et les bactéries, dans l'analyse des aliments et environnementale.
